# EUROPEAN PATENT APPLICATION

(11) **EP 3 778 515 A1**
(43) Date of publication of application: **17.02.2021**
(21) Application number: 19776020.0
(22) Date of filing: 29.03.2019
(51) Int. Cl.: C03C 27/12, B32B 17/10, B60J 1/00, B60J 1/02, B60K 35/00

(54) **INTERMEDIATE FILM FOR LAMINATED GLASS, LAMINATED GLASS, AND METHOD FOR INSTALLING LAMINATED GLASS**

(30) Priority: 29.03.2018 JP 2018065768
(71) Applicant: SEKISUI CHEMICAL CO., LTD., Osaka-shi Osaka 530-8565 (JP)
(72) Inventor: OOTA, Yuusuke, Kouka-shi, Shiga 528-8585 (JP); NOHARA, Atsushi, Kouka-shi, Shiga 528-8585 (JP)
(74) Representative: Ter Meer Steinmeister & Partner
(86) International application number: PCT/JP2019/013943
(87) International publication number: WO 2019/189734

(57) **Abstract**

Provided is a laminated glass having excellent heat shielding property, capable of suppressing multiple images in a head-up display, and providing better image display. The laminated glass according to the present invention includes a first lamination glass member, a first resin layer, an infrared reflective layer, and a second lamination glass member, and a laminate of the infrared reflective layer and the second lamination glass member has a small thickness, or a laminate of the infrared reflective layer and the second lamination glass member is wedge-like, or the laminated glass includes a first lamination glass member, a first resin layer, an infrared reflective layer, a second resin layer, and a second lamination glass member, and a laminate of the infrared reflective layer, the second resin layer and the second lamination glass member has a small thickness, or a laminate of the infrared reflective layer, the second resin layer and the second lamination glass member is wedge-like.

## Description

### TECHNICAL FIELD

The present invention relates to an interlayer film for laminated glass for use in a laminated glass. The present invention relates to a laminated glass that is a head-up display. Also, the present invention relates to a method for installing the laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates. High heat shielding property is required for such a laminated glass used in openings of vehicles and buildings.

For enhancing the heat shielding property, an interlayer film having an infrared reflective layer is sometimes used. The interlayer film having an infrared reflective layer is disclosed in the following Patent Document 1.

Moreover, as a laminated glass used in automobiles, a head-up display (HUD) has been known. In a HUD, it is possible to display measurement information including automobile traveling data such as speed on the windshield of the automobile, and the driver can recognize as if the display were shown in front of the windshield.

In the HUD, there is a problem that the measurement information or the like is doubly observed.

In order to suppress double images, a wedge-like shaped interlayer film has been used. The following Patent Document 2 discloses a laminated glass in which a wedge-like shaped interlayer film having a prescribed wedge angle is sandwiched between a pair of glass plates. In such a laminated glass, by the adjustment of the wedge angle of the interlayer film, a display of measurement information reflected by one glass plate and a display of measurement information reflected by another glass plate can be focused into one point to make an image in the visual field of a driver. As such, the display of measurement information is hard to be observed doubly and the visibility of a driver is hardly hindered.

### Related Art Documents

### Patent Documents

Patent Document 1: JP 2017-81775 A
Patent Document 2: JP H4-502525 T

### SUMMARY OF THE INVENTION

### PROBLEMS TO BE SOLVED BY THE INVENTION

In Patent Document 2, double images are suppressed by focusing a display of measurement information reflected by one glass plate and a display of measurement information reflected by another glass plate into one point to make an image in the visual field of a driver.

However, in a laminated glass using an interlayer film having an infrared reflective layer as described in Patent Document 1, display of measurement information is generated not only by reflection on one glass plate and reflection on other glass plate, but also by reflection on the infrared reflective layer.

A laminated glass prepared with an interlayer film having an infrared reflective layer has a problem that measurement information or the like is triply observed.

Conventionally, a laminated glass prepared with an interlayer film having an infrared reflective layer has a problem that triple images are difficult to be suppressed.

It is an object of the present invention to provide an interlayer film for laminated glass, and a laminated glass having excellent heat shielding property, capable of suppressing multiple images in a head-up display, and providing better image display. It is also an object of the present invention to provide a method for installing the laminated glass.

### MEANS FOR SOLVING THE PROBLEMS

According to a broad aspect of the present invention, there is provided an interlayer film for laminated glass, comprising a first resin layer, an infrared reflective layer, and a second resin layer, the first resin layer, the infrared reflective layer, and the second resin layer being arranged side by side in this order, the first resin layer being wedge-like, the second resin layer being wedge-like.

According to a broad aspect of the present invention, there is provided a laminated glass that is a head-up display, the laminated glass having a display region of the head-up display, the laminated glass comprising a first lamination glass member, a first resin layer, an infrared reflective layer, and a second lamination glass member, the first lamination glass member, the first resin layer, the infrared reflective layer, and the second lamination glass member being arranged side by side in this order, a laminate of the first lamination glass member and the first resin layer being wedge-like, or the laminated glass comprising a first lamination glass member, a first resin layer, an infrared reflective layer, a second resin layer, and a second lamination glass member, the first lamination glass member, the first resin layer, the infrared reflective layer, the second resin layer, and the second lamination glass member being arranged side by side in this order, a laminate of the first lamination glass member and the first resin layer being wedge-like, when the laminated glass comprising the first lamination glass member, the first resin layer, the infrared reflective layer, and the second lamination glass member, a laminate of the infrared reflective layer and the second lamination glass member having a thickness of 2.93 mm or less, or a laminate of the infrared reflective layer and the second lamination glass member being wedge-like, when the laminated glass comprising the first lamination glass member, the first resin layer, the infrared reflective layer, the second resin layer, and the second lamination glass member, a laminate of the infrared reflective layer, the second resin layer and the second lamination glass member having a thickness of 2.93 mm or less, or a laminate of the infrared reflective layer, the second resin layer and the second lamination glass member being wedge-like.

According to a broad aspect of the present invention, there is provided a laminated glass that is a head-up display, the laminated glass having a display region of the head-up display, the laminated glass comprising a first lamination glass member, a first resin layer, an infrared reflective layer, and a second lamination glass member, the first lamination glass member, the first resin layer, the infrared reflective layer, and the second lamination glass member being arranged side by side in this order, a laminate of the first lamination glass member and the first resin layer being wedge-like, or the laminated glass comprising a first lamination glass member, a first resin layer, an infrared reflective layer, a second resin layer, and a second lamination glass member, the first lamination glass member, the first resin layer, the infrared reflective layer, the second resin layer, and the second lamination glass member being arranged side by side in this order, a laminate of the first lamination glass member and the first resin layer being wedge-like, when the display region of the laminated glass is irradiated with light at an incident angle of 68.3° from outside the first lamination glass member, and a reflected image is observed at a position of 2500 mm from the display region, a distance between two reflected images that are farthest from each other among three reflected images of a first reflected image by the first lamination glass member, a second reflected image by the infrared reflective layer, and a third reflected image by the second lamination glass member being 2.5 mm or less.

In a specific aspect of the laminated glass according to the present invention, when the laminated glass comprises the first lamination glass member, the first resin layer, the infrared reflective layer, and the second lamination glass member, a laminate of the infrared reflective layer and the second lamination glass member has a thickness of 2.93 mm or less, or a laminate of the infrared reflective layer and the second lamination glass member is wedge-like, whereas when the laminated glass comprises the first lamination glass member, the first resin layer, the infrared reflective layer, the second resin layer, and the second lamination glass member, a laminate of the infrared reflective layer, the second resin layer and the second lamination glass member has a thickness of 2.93 mm or less, or a laminate of the infrared reflective layer, the second resin layer and the second lamination glass member is wedge-like.

In a specific aspect of the laminated glass according to the present invention, when the laminated glass comprises the first lamination glass member, the first resin layer, the infrared reflective layer, and the second lamination glass member, a laminate of the infrared reflective layer and the second lamination glass member has a thickness of 2.93 mm or less, whereas when the laminated glass comprises the first lamination glass member, the first resin layer, the infrared reflective layer, the second resin layer, and the second lamination glass member, a laminate of the infrared reflective layer, the second resin layer and the second lamination glass member has a thickness of 2.93 mm or less.

In a specific aspect of the laminated glass according to the present invention, when the laminated glass comprises the first lamination glass member, the first resin layer, the infrared reflective layer, and the second lamination glass member, a laminate of the infrared reflective layer and the second lamination glass member is wedge-like, whereas when the laminated glass comprises the first lamination glass member, the first resin layer, the infrared reflective layer, the second resin layer, and the second lamination glass member, a laminate of the infrared reflective layer, the second resin layer and the second lamination glass member is wedge-like.

In a specific aspect of the laminated glass according to the present invention, when the laminated glass comprises the first lamination glass member, the first resin layer, the infrared reflective layer, and the second lamination glass member, the infrared reflective layer is wedge-like, whereas when the laminated glass comprises the first lamination glass member, the first resin layer, the infrared reflective layer, the second resin layer, and the second lamination glass member, the infrared reflective layer is wedge-like.

In a specific aspect of the laminated glass according to the present invention, when the laminated glass comprises the first lamination glass member, the first resin layer, the infrared reflective layer, the second resin layer, and the second lamination glass member, the first resin layer is wedge-like, and the second resin layer is wedge-like.

In a specific aspect of the laminated glass according to the present invention, when the laminated glass comprises the first lamination glass member, the first resin layer, the infrared reflective layer, and the second lamination glass member, the first resin layer contains a polyvinyl acetal resin as a resin, whereas when the laminated glass comprises the first lamination glass member, the first resin layer, the infrared reflective layer, the second resin layer, and the second lamination glass member, the first resin layer contains a polyvinyl acetal resin as a resin, and the second resin layer contains a polyvinyl acetal resin as a resin.

In a specific aspect of the laminated glass according to the present invention, when the laminated glass comprises the first lamination glass member, the first resin layer, the infrared reflective layer, and the second lamination glass member, the first resin layer contains a plasticizer, whereas when the laminated glass comprises the first lamination glass member, the first resin layer, the infrared reflective layer, the second resin layer, and the second lamination glass member, the first resin layer contains a plasticizer, and the second resin layer contains a plasticizer.

In a specific aspect of the laminated glass according to the present invention, the first resin layer has a two or more-layer structure.

In a specific aspect of the laminated glass according to the present invention, the infrared reflective layer has such a property that the infrared transmittance is 40% or less at at least one wavelength within the range of 800 nm to 2000 nm.

In a specific aspect of the laminated glass according to the present invention, the infrared reflective layer has an infrared reflectance at a wavelength of 800 nm to 1200 nm of 20% or more.

In a specific aspect of the laminated glass according to the present invention, the infrared reflective layer has a visible light transmittance at a wavelength of 380 nm to 780 nm of 70% or more.

In a specific aspect of the laminated glass according to the present invention, Tts of the laminated glass measured in conformity with ISO 13837 is 60% or less.

According to a broad aspect of the present invention, there is provided a method for installing the aforementioned laminated glass to an opening of a vehicle, between an exterior space and an interior space to which a heat ray is incident from the exterior space, the laminated glass being installed to the opening in such a manner that the first lamination glass member is located on a side of the interior space, and the second lamination glass member is located on a side of the exterior space.

### EFFECT OF THE INVENTION

The interlayer film for laminated glass according to the present invention includes a first resin layer, an infrared reflective layer, and a second resin layer. In the interlayer film for laminated glass according to the present invention, the first resin layer, the infrared reflective layer, and the second resin layer are arranged side by side in this order, the first resin layer is wedge-like, and the second resin layer is wedge-like. Since the aforementioned configuration is provided, the interlayer film for laminated glass according to the present invention is excellent in heat shielding property, and is capable of suppressing multiple images in a head-up display, and providing better image display.

The laminated glass according to the present invention is a laminated glass that is a head-up display. The laminated glass according to the present invention has a display region of the head-up display. The laminated glass according to the present invention is a first laminated glass including a first lamination glass member, a first resin layer, an infrared reflective layer, and a second lamination glass member, or a second laminated glass including a first lamination glass member, a first resin layer, an infrared reflective layer, a second resin layer, and a second lamination glass member. In the first laminated glass, the first lamination glass member, the first resin layer, the infrared reflective layer, and the second lamination glass member are arranged side by side in this order. In the second laminated glass, the first lamination glass member, the first resin layer, the infrared reflective layer, the second resin layer, and the second lamination glass member are arranged side by side in this order. In each of the first laminated glass and the second laminated glass, a laminate of the first lamination glass member and the first resin layer is wedge-like. In the first laminated glass, a laminate of the infrared reflective layer and the second lamination glass member has a thickness of 2.93 mm or less, or a laminate of the infrared reflective layer and the second lamination glass member is wedge-like. In the second laminated glass, a laminate of the infrared reflective layer, the second resin layer and the second lamination glass member has a thickness of 2.93 mm or less, or a laminate of the infrared reflective layer, the second resin layer and the second lamination glass member is wedge-like. Since the aforementioned configuration is provided, the laminated glass according to the present invention is excellent in heat shielding property, and is capable of suppressing multiple images in a head-up display, and providing better image display.

The laminated glass according to the present invention is a laminated glass that is a head-up display. The laminated glass according to the present invention has a display region of the head-up display. The laminated glass according to the present invention is a first laminated glass including a first lamination glass member, a first resin layer, an infrared reflective layer, and a second lamination glass member, or a second laminated glass including a first lamination glass member, a first resin layer, an infrared reflective layer, a second resin layer, and a second lamination glass member. In the first laminated glass, the first lamination glass member, the first resin layer, the infrared reflective layer, and the second lamination glass member are arranged side by side in this order. In the second laminated glass, the first lamination glass member, the first resin layer, the infrared reflective layer, the second resin layer, and the second lamination glass member are arranged side by side in this order. In each of the first laminated glass and the second laminated glass, a laminate of the first lamination glass member and the first resin layer is wedge-like. The display region of the laminated glass according to the present invention is irradiated with light at an incident angle of 68.3° from outside the first lamination glass member, and a reflected image is observed at a position of 2500 mm from the display region. In this observation, a distance between two reflected images that are farthest from each other among three reflected images of a first reflected image by the first lamination glass member, a second reflected image by the infrared reflective layer, and a third reflected image by the second lamination glass member is 2.5 mm or less. Since the aforementioned configuration is provided, the laminated glass according to the present invention is excellent in heat shielding property, and is capable of suppressing multiple images in a head-up display, and providing better image display.

### BRIEF DESCRIPTION OF DRAWINGS

[Fig. 1] Figs. 1(a) and (b) are a sectional view and a front view, respectively, schematically showing a laminated glass, in accordance with a first embodiment of the present invention.
[Fig. 2] Fig. 2 is a sectional view schematically showing laminated glass in accordance with a second embodiment of the present invention.
[Fig. 3] Fig. 3 is a sectional view schematically showing a laminated glass in accordance with a third embodiment of the present invention.
[Fig. 4] Fig. 4 is a sectional view schematically showing laminated glass in accordance with a fourth embodiment of the present invention.
[Fig. 5] Figs. 5(a) and (b) are a sectional view and a front view, respectively, schematically showing a laminated glass, in accordance with a fifth embodiment of the present invention.
[Fig. 6] Figs. 6(a) and (b) are a sectional view and a front view, respectively, schematically showing a laminated glass, in accordance with a sixth embodiment of the present invention.
[Fig. 7] Fig. 7 is a sectional view schematically showing a laminated glass in accordance with a seventh embodiment of the present invention.
[Fig. 8] Fig. 8 is a sectional view schematically showing a laminated glass in accordance with an eighth embodiment of the present invention.
[Fig. 9] Figs. 9(a) and (b) are a sectional view and a front view, respectively, schematically showing a laminated glass, in accordance with a ninth embodiment of the present invention.
[Fig. 10] Fig. 10 is a sectional view schematically showing a laminated glass in accordance with a tenth embodiment of the present invention.
[Fig. 11] Fig. 11 is a sectional view schematically showing a laminated glass in accordance with an eleventh embodiment of the present invention.
[Fig. 12] Fig. 12 is a sectional view schematically showing a laminated glass in accordance with a twelfth embodiment of the present invention.
[Fig. 13] Fig. 13 is a diagram for illustrating an apparatus for measuring a reflected image.

### MODES FOR CARRYING OUT THE INVENTION

Hereinafter, the details of the present invention will be described.

In a specific aspect, the laminated glass according to the present invention is the following first laminated glass (1-1) or the following second laminated glass (2-1). The laminated glass according to the present invention is preferably the following first laminated glass (1-1) and is also preferably the following second laminated glass (2-1).

The first laminated glass (1-1) has the following configurations 1), 2), 3) and 4).
1) The laminated glass is a head-up display, and has a display region of the head-up display.
2) The laminated glass includes a first lamination glass member, a first resin layer, an infrared reflective layer, and a second lamination glass member, and the first lamination glass member, the first resin layer, the infrared reflective layer, and the second lamination glass member are arranged side by side in this order.
3) A laminate of the first lamination glass member and the first resin layer is wedge-like.
4) A laminate of the infrared reflective layer and the second lamination glass member has a thickness of 2.93 mm or less, or a laminate of the infrared reflective layer and the second lamination glass member is wedge-like.

The second laminated glass (2-1) has the following configurations 11), 12), 13) and 14).
11) The laminated glass is a head-up display, and has a display region of the head-up display.
12) The laminated glass includes a first lamination glass member, a first resin layer, an infrared reflective layer, a second resin layer, and a second lamination glass member, and the first lamination glass member, the first resin layer, the infrared reflective layer, the second resin layer, and the second lamination glass member are arranged side by side in this order.
13) A laminate of the first lamination glass member and the first resin layer is wedge-like.
14) A laminate of the infrared reflective layer, the second resin layer and the second lamination glass member has a thickness of 2.93 mm or less, or a laminate of the infrared reflective layer, the second resin layer and the second lamination glass member is wedge-like.

Since the aforementioned configuration is provided, the laminated glass according to the present invention is excellent in heat shielding property, and is capable of suppressing multiple images in a head-up display, and providing better image display.

Also, in a specific aspect, the laminated glass according to the present invention is the following first laminated glass (1-2) or the following second laminated glass (2-2) .

The first laminated glass (1-2) has the following configurations 1), 2), 3) and 5).
1) The laminated glass is a head-up display, and has a display region of the head-up display.
2) The laminated glass includes a first lamination glass member, a first resin layer, an infrared reflective layer, and a second lamination glass member, and the first lamination glass member, the first resin layer, the infrared reflective layer, and the second lamination glass member are arranged side by side in this order.
3) A laminate of the first lamination glass member and the first resin layer is wedge-like.
5) The display region of the laminated glass is irradiated with light at an incident angle of 68.3° from outside the first lamination glass member, and a reflected image is observed at a position of 2500 mm from the display region. In this observation, a distance between two reflected images that are farthest from each other among three reflected images of a first reflected image by the first lamination glass member, a second reflected image by the infrared reflective layer, and a third reflected image by the second lamination glass member is 2.5 mm or less. When three distances: the distance between the first reflected image and the second reflected image, the distance between the second reflected image and the third reflected image, and the distance between the third reflected image and the first reflected image are measured, the maximum of the three distances is 2.5 mm or less.

The second laminated glass (2-2) has the following configurations 11), 12), 13) and 15).
11) The laminated glass is a head-up display, and has a display region of the head-up display.
12) The laminated glass includes a first lamination glass member, a first resin layer, an infrared reflective layer, a second resin layer, and a second lamination glass member, and the first lamination glass member, the first resin layer, the infrared reflective layer, the second resin layer, and the second lamination glass member are arranged side by side in this order.
13) A laminate of the first lamination glass member and the first resin layer is wedge-like.
15) The display region of the laminated glass is irradiated with light at an incident angle of 68.3° from outside the first lamination glass member, and a reflected image is observed at a position of 2500 mm from the display region. In this observation, a distance between two reflected images that are farthest from each other among three reflected images of a first reflected image by the first lamination glass member, a second reflected image by the infrared reflective layer, and a third reflected image by the second lamination glass member is 2.5 mm or less.

Since the aforementioned configuration is provided, the laminated glass according to the present invention is excellent in heat shielding property, and is capable of suppressing multiple images in a head-up display, and providing better image display.

From the viewpoint of effectively suppressing multiple images in the head-up display, and effectively providing better image display, it is preferred that the first laminated glass (1-2) having the configurations 1), 2), 3) and 5) have the configuration 4). From the viewpoint of effectively suppressing multiple images in the head-up display, and effectively providing better image display, it is preferred that the second laminated glass (2-2) having the configurations 11), 12), 13) and 15) have the configuration 14).

In the configuration 3) and the configuration 13), only the first lamination glass member may be wedge-like, or only the first resin layer may be wedge-like, or both of the first lamination glass member and the first resin layer may be wedge-like. It is preferred that the first resin layer be wedge-like.

In the configuration 3) and the configuration 13), when the first lamination glass member is wedge-like, the weight of the laminated glass tends to be large compared with the case where the first resin layer is wedge-like. Therefore, from the viewpoint of handleability of the laminated glass, and improvement in fuel consumption of a vehicle, it is preferred that the first resin layer be wedge-like, and the first lamination glass member have a wedge angle of 0 mrad or more and less than 0.1 mrad (the first lamination glass member is not wedge-like at 0 mrad) in the configuration 3) and the configuration 13). On the other hand, when a relatively large wedge angle is required as the laminated glass, it is preferred that the first resin layer be wedge-like, and the first lamination glass member have a wedge-like shape with a wedge angle of 0.1 mrad or more.

In the configuration 4), 4A) a laminate of the infrared reflective layer and the second lamination glass member may have a thickness of 2.93 mm or less, and 4B) a laminate of the infrared reflective layer and the second lamination glass member may be wedge-like. 4A) A laminate of the infrared reflective layer and the second lamination glass member has a thickness of 2.93 mm or less, or 4B) a laminate of the infrared reflective layer and the second lamination glass member may be wedge-like.

In the configuration 4B), when the second lamination glass member is wedge-like, the weight of the laminated glass tends to be large compared with the case where the infrared reflective layer is wedge-like. Therefore, from the viewpoint of handleability of the laminated glass, and improvement in fuel consumption of a vehicle, it is preferred that the infrared reflective layer be wedge-like, and the second lamination glass member have a wedge angle of 0 mrad or more and less than 0.1 mrad (the second lamination glass member is not wedge-like at 0 mrad) in the configuration 4). On the other hand, when a relatively large wedge angle is required as the laminated glass, it is preferred that the infrared reflective layer be wedge-like, and the second lamination glass member have a wedge-like shape with a wedge angle of 0.1 mrad or more.

In the configuration 14), 14A) a laminate of the infrared reflective layer, the second resin layer and the second lamination glass member may have a thickness of 2.93 mm or less, and 14B) a laminate of the infrared reflective layer, the second resin layer and the second lamination glass member may be wedge-like. 14A) A laminate of the infrared reflective layer, the second resin layer and the second lamination glass member has a thickness of 2.93 mm or less, or 14B) a laminate of the infrared reflective layer, the second resin layer and the second lamination glass member may be wedge-like.

In the configuration 14B), when the second lamination glass member is wedge-like, the weight of the laminated glass tends to be large compared with the case where the second resin layer or the infrared reflective layer is wedge-like. Therefore, from the viewpoint of handleability of the laminated glass, and improvement in fuel consumption of a vehicle, it is preferred that the second resin layer or the infrared reflective layer be wedge-like, and the second lamination glass member have a wedge angle of 0 mrad or more and less than 0.1 mrad (the second lamination glass member is not wedge-like at 0 mrad) in the configuration 14). On the other hand, when a relatively large wedge angle is required as the laminated glass, it is preferred that the second resin layer or the infrared reflective layer be wedge-like, and the second lamination glass member have a wedge-like shape with a wedge angle of 0.1 mrad or more. In these cases, the second resin layer may be wedge-like, the infrared reflective layer may be wedge-like, or the second resin layer and the infrared reflective layer may be wedge-like.

In the present description, "thickness" in a laminated glass means an average thickness in the display region. In the present description, "thickness" in an interlayer film means an average thickness in an area located over a display region of a laminated glass, and is preferably means an average thickness in a region for display of the interlayer film.

In the configuration 4A), the thickness of the laminate of the infrared reflective layer and the second lamination glass member is relatively small. In the configuration 4A), the thickness of the laminate of the infrared reflective layer and the second lamination glass member is preferably 2.93 mm or less, more preferably 2.31 mm or less, still more preferably 2.18 mm or less, further preferably 2.0 mm or less, still further preferably 1.8 mm or less, and is especially preferably 1.6 mm or less. When such a preferred thickness is satisfied, it is possible to effectively suppress multiple images in the head-up display, and effectively providing better image display. In the configuration 4A), the thickness of the laminate of the infrared reflective layer and the second lamination glass member may be 1.1 mm or more, or may be 1.5 mm or more.

In the configuration 14A), the thickness of the laminate of the infrared reflective layer, the second resin layer and the second lamination glass member is relatively small. In the configuration 14A), the thickness of the laminate of the infrared reflective layer, the second resin layer and the second lamination glass member is preferably 2.93 mm or less, more preferably 2.31 mm or less, still more preferably 2.18 mm or less, further preferably 2.0 mm or less, still further preferably 1.8 mm or less, and is especially preferably 1.6 mm or less. When such a preferred thickness is satisfied, it is possible to effectively suppress multiple images in the head-up display, and effectively providing better image display. In the configuration 14A), the thickness of the laminate of the infrared reflective layer, the second resin layer and the second lamination glass member may be 1.1 mm or more, or may be 1.5 mm or more.

In the configuration 4B), since the laminate of the infrared reflective layer and the second lamination glass member is wedge-like, the thickness of the laminate of the infrared reflective layer and the second lamination glass member may be relatively large. The thickness of the laminate of the infrared reflective layer and the second lamination glass member may be relatively small. In the configuration 4B), the thickness of the laminate of the infrared reflective layer and the second lamination glass member is preferably 2.1 mm or less, more preferably 1.93 mm or less, still more preferably 1.8 mm or less, further preferably 1.5 mm or less, and still further preferably 1.3 mm or less. When such a preferred thickness is satisfied, it is possible to effectively suppress multiple images in the head-up display, and effectively providing better image display. In the configuration 4B), the thickness of the laminate of the infrared reflective layer and the second lamination glass member may be 0.7 mm or more, or may be 1.0 mm or more.

In the configuration 14B), since the laminate of the infrared reflective layer, the second resin layer and the second lamination glass member is wedge-like, the thickness of the laminate of the infrared reflective layer, the second resin layer, and the second lamination glass member may be relatively large. The thickness of the laminate of the infrared reflective layer, the second resin layer and the second lamination glass member may be relatively small. In the configuration 14B), the thickness of the laminate of the infrared reflective layer, the second resin layer and the second lamination glass member is preferably 2.31 mm or less, more preferably 2.1 mm or less, still more preferably 1.8 mm or less, further preferably 1.5 mm or less, and still further preferably 1.3 mm or less. When such a preferred thickness is satisfied, it is possible to effectively suppress multiple images in the head-up display, and effectively providing better image display. In the configuration 14B), the thickness of the laminate of the infrared reflective layer, the second resin layer and the second lamination glass member may be 1.1 mm or more, or may be 1.5 mm or more.

In the configuration 14A), it is preferred that the thickness of the second resin layer be relatively small. The thickness of the second resin layer may be large depending on the thickness of the infrared reflective layer, and the thickness of the second lamination glass member. From the viewpoint of effectively suppressing multiple images in a head-up display, and effectively providing better image display, in the configuration 14A), the thickness of the second resin layer is preferably 2.2 mm or less, more preferably 1.6 mm or less, and further preferably 0.8 mm or less. In the configuration 14A), the thickness of the second resin layer may be 0.3 mm or more, or may be 0.45 mm or more.

In the configuration 4A), it is preferred that the thickness of the second lamination glass member be relatively small. The thickness of the second lamination glass member may be large depending on the thickness of the infrared reflective layer. From the viewpoint of effectively suppressing multiple images in a head-up display, and effectively providing better image display, in the configuration 4A), the thickness of the second lamination glass member is preferably 2.5 mm or less, more preferably 2.3 mm or less, still more preferably 2.0 mm or less, further preferably 1.8 mm or less, and especially preferably 1.6 mm or less. In the configuration 4A), the thickness of the second lamination glass member may be 0.7 mm or more, or may be 1.0 mm or more.

In the configuration 14A), it is preferred that the thickness of the second lamination glass member be relatively small. The thickness of the second lamination glass member may be large depending on the thickness of the infrared reflective layer, and the thickness of the second resin layer. From the viewpoint of effectively suppressing multiple images in a head-up display, and effectively providing better image display, in the configuration 14A), the thickness of the second laminated glass is preferably 2.1 mm or less, more preferably 1.93 mm or less, still more preferably 1.5 mm or less, further preferably 1.4 mm or less, and especially preferably 1.3 mm or less. In the configuration 14A), the thickness of the second lamination glass member may be 0.7 mm or more, or may be 1.0 mm or more.

In the configuration 4B), since the laminate of the infrared reflective layer and the second lamination glass member is wedge-like, the thickness of the second lamination glass member may be relatively large. From the viewpoint of effectively suppressing multiple images in a head-up display, and effectively providing better image display, in the configuration 4B), the thickness of the second lamination glass member is preferably 2.1 mm or less, more preferably 1.93 mm or less, still more preferably 1.5 mm or less, further preferably 1.4 mm or less, and especially preferably 1.3 mm or less. In the configuration 4B), the thickness of the second lamination glass member may be 0.7 mm or more, or may be 1.0 mm or more.

In the configuration 14B), since the laminate of the infrared reflective layer, the second resin layer and the second lamination glass member is wedge-like, the thickness of the second lamination glass member may be relatively large. From the viewpoint of effectively suppressing multiple images in a head-up display, and effectively providing better image display, in the configuration 14B), the thickness of the second lamination glass member is preferably 2.1 mm or less, more preferably 1.93 mm or less, still more preferably 1.5 mm or less, further preferably 1.4 mm or less, and especially preferably 1.3 mm or less. In the configuration 14B), the thickness of the second lamination glass member may be 0.7 mm or more, or may be 1.0 mm or more.

From the viewpoint of effectively suppressing multiple images in a head-up display, and effectively providing better image display, the thickness of the laminated glass is preferably 2.2 mm or more, more preferably 2.8 mm or more, and is preferably 6.9 mm or less, more preferably 6.3 mm or less.

In the configuration 4A), since the thickness of the laminate of the infrared reflective layer and the second lamination glass member is relatively small, the laminate of the infrared reflective layer and the second lamination glass member need not be wedge-like. In the configuration 4A), the laminate of the infrared reflective layer and the second lamination glass member may be wedge-like. In the configuration 4A), the wedge angle of the laminate of the infrared reflective layer and the second lamination glass member is preferably 0 mrad or more (not being wedge-like at 0 mrad), more preferably 0.15 mrad or more, further preferably 0.20 mrad or more, and is preferably 2.0 mrad or less, more preferably 1.5 mrad or less.

In the configuration 14A), since the thickness of the laminate of the infrared reflective layer, the second resin layer and the second lamination glass member is relatively small, the laminate of the infrared reflective layer, the second resin layer and the second lamination glass member need not be wedge-like. In the configuration 14A), the laminate of the infrared reflective layer, the second resin layer and the second lamination glass member may be wedge-like. In the configuration 14A), the wedge angle of the laminate of the infrared reflective layer, the second resin layer and the second lamination glass member is preferably 0 mrad or more (not being wedge-like at 0 mrad), more preferably 0.15 mrad or more, further preferably 0.20 mrad or more, and is preferably 2.0 mrad or less, more preferably 1.5 mrad or less.

In the configuration 4B), the laminate of the infrared reflective layer and the second lamination glass member is wedge-like. From the viewpoint of effectively suppressing multiple images in a head-up display, and effectively providing better image display, in the configuration 4B), the wedge angle of the laminate of the infrared reflective layer and the second lamination glass member is preferably 0.15 mrad or more, and more preferably 0.20 mrad or more. From the viewpoint of effectively suppressing multiple images in a head-up display, and effectively providing better image display, in the configuration 4B), the wedge angle of the laminate of the infrared reflective layer and the second lamination glass member is preferably 2.0 mrad or less, and more preferably 1.5 mrad or less.

In the configuration 14B), the laminate of the infrared reflective layer, the second resin layer and the second lamination glass member is wedge-like. From the viewpoint of effectively suppressing multiple images in a head-up display, and effectively providing better image display, in the configuration 14B), the wedge angle of the laminate of the infrared reflective layer, the second resin layer and the second lamination glass member is preferably 0.15 mrad or more, and more preferably 0.20 mrad or more. From the viewpoint of effectively suppressing multiple images in a head-up display, and effectively providing better image display, in the configuration 14B), the wedge angle of the laminate of the infrared reflective layer, the second resin layer and the second lamination glass member is preferably 2.0 mrad or less, and more preferably 1.5 mrad or less.

In the configuration 4A) or the configuration 14A), since the thickness of the laminate of the infrared reflective layer and the second lamination glass member is relatively small, the infrared reflective layer need not be wedge-like. In the configuration 4B), when the second lamination glass member is wedge-like, the infrared reflective layer need not be wedge-like. In the configuration 14B), when the laminate of the second resin layer and the second lamination glass member is wedge-like, the infrared reflective layer need not be wedge-like. From the viewpoint of effectively suppressing multiple images in a head-up display, and effectively providing better image display, the wedge angle of the infrared reflective layer is preferably 0 mrad or more (not being wedge-like at 0 mrad), more preferably 0.15 mrad or more, further preferably 0.20 mrad or more, and is preferably 2.0 mrad or less, more preferably 1.5 mrad or less.

In the configuration 14A), since the thickness of the laminate of the infrared reflective layer, the second resin layer and the second lamination glass member is relatively small, the second resin layer need not be wedge-like. In the configuration 14B), when the laminate of the infrared reflective layer, the second resin layer and the second lamination glass member is wedge-like, the second resin layer need not be wedge-like. From the viewpoint of effectively suppressing multiple images in a head-up display, and effectively providing better image display, the wedge angle of the second resin layer is preferably 0 mrad or more (not being wedge-like at 0 mrad), more preferably 0.15 mrad or more, and further preferably 0.20 mrad or more. From the viewpoint of effectively suppressing multiple images in a head-up display, and effectively providing better image display, the wedge angle of the second resin layer is preferably 2.0 mrad or less, and more preferably 1.5 mrad or less.

In the configuration 4A), since the thickness of the laminate of the infrared reflective layer and the second lamination glass member is relatively small, the second lamination glass member need not be wedge-like. In the configuration 14A), since the thickness of the laminate of the infrared reflective layer, the second resin layer and the second lamination glass member is relatively small, the second lamination glass member need not be wedge-like. In the configuration 4B), when the infrared reflective layer is wedge-like, the second lamination glass member need not be wedge-like. In the configuration 14B), when the laminate of the infrared reflective layer and the second resin layer is wedge-like, the second lamination glass member need not be wedge-like. From the viewpoint of effectively suppressing multiple images in a head-up display, and effectively providing better image display, the wedge angle of the second lamination glass member is preferably 0 mrad or more (not being wedge-like at 0 mrad). From the viewpoint of handleability of the laminated glass, and improvement in fuel consumption of a vehicle, the wedge angle of the second lamination glass member is preferably 2.0 mrad or less, more preferably 1.5 mrad or less, and further preferably 1.0 mrad or less.

In the laminated glass according to the present invention, it is preferred that the thickness of the laminate of first lamination glass member and the first resin layer be relatively small. The thickness of the laminate of the first lamination glass member and the first resin layer is preferably 2.93 mm or less, more preferably 2.31 mm or less, still more preferably 2.18 mm or less, further preferably 2.0 mm or less, still further preferably 1.8 mm or less, and especially preferably 1.6 mm or less. When such a preferred thickness is satisfied, it is possible to effectively suppress multiple images in the head-up display, and effectively providing better image display. The thickness of the laminate of the first lamination glass member and the first resin layer may be 1.1 mm or more, or may be 1.5 mm or more.

In the laminated glass according to the present invention, it is preferred that the thickness of the first lamination glass member be relatively small. From the viewpoint of effectively suppressing multiple images in a head-up display, and effectively providing better image display, the thickness of the first lamination glass member is preferably 2.1 mm or less, more preferably 1.93 mm or less, still more preferably 1.8 mm or less, further preferably 1.5 mm or less, and still further preferably 1.3 mm or less. The thickness of the first lamination glass member may be 0.7 mm or more, or may be 1.0 mm or more.

In the laminated glass according to the present invention, it is preferred that the thickness of the first resin layer be relatively small. From the viewpoint of effectively suppressing multiple images in a head-up display, and effectively providing better image display, the thickness of the first resin layer is preferably 2.2 mm or less, and more preferably 1.6 mm or less. The thickness of the first resin layer may be 0.3 mm or more, or may be 0.45 mm or more.

From the viewpoint of effectively suppressing multiple images in a head-up display, and effectively providing better image display, the wedge angle of the first lamination glass member and the first resin layer is preferably 0.15 mrad or more, and more preferably 0.20 mrad or more. From the viewpoint of effectively suppressing multiple images in a head-up display, and effectively providing better image display, the wedge angle of the laminate of the first lamination glass member and the first resin layer is preferably 2.0 mrad or less, and more preferably 1.5 mrad or less.

When the first resin layer is wedge-like, the first lamination glass member need not be wedge-like. From the viewpoint of effectively suppressing multiple images in a head-up display, and effectively providing better image display, the wedge angle of the first lamination glass member is preferably 0 mrad or more (not being wedge-like at 0 mrad). From the viewpoint of handleability of the laminated glass, and improvement in fuel consumption of a vehicle, the wedge angle of the first lamination glass member is preferably 2.0 mrad or less, more preferably 1.5 mrad or less, and further preferably 1.0 mrad or less.

When the first lamination glass member is wedge-like, the first resin layer need not be wedge-like. From the viewpoint of effectively suppressing multiple images in a head-up display, and effectively providing better image display, the wedge angle of the first resin layer is preferably 0 mrad or more (not being wedge-like at 0 mrad), more preferably 0.15 mrad or more, and further preferably 0.20 mrad or more. From the viewpoint of effectively suppressing multiple images in a head-up display, and effectively providing better image display, the wedge angle of the first resin layer is preferably 2.0 mrad or less, and more preferably 1.5 mrad or less.

When the first lamination glass member is wedge-like, the weight of the laminated glass tends to be large compared with the case where the first resin layer is wedge-like. Therefore, from the viewpoint of handleability of the laminated glass, and improvement in fuel consumption of a vehicle, it is preferred that the first resin layer be wedge-like, and the first lamination glass member have a wedge angle of 0 mrad or more and less than 0.1 mrad (the first lamination glass member is not wedge-like at 0 mrad). On the other hand, when a relatively large wedge angle is required as the laminated glass, it is preferred that the first resin layer be wedge-like, and the first lamination glass member have a wedge-like shape with a wedge angle of 0.1 mrad or more.

From the viewpoint of effectively suppressing multiple images in a head-up display, and effectively providing better image display, the wedge angle of the laminated glass is preferably 0.15 mrad or more, more preferably 0.20 mrad or more, and is preferably 2.0 mrad or less, more preferably 1.5 mrad or less.

The sectional shape in the thickness direction of the laminated glass is a wedge-like shape. Examples of the sectional shape in the thickness direction of the laminated glass include a trapezoidal shape, a triangular shape, a pentagonal shape, and the like.

The interlayer film for laminated glass according to the present invention (hereinafter, sometimes described as "interlayer film") includes a first resin layer, an infrared reflective layer, and a second resin layer. In the interlayer film according to the present invention, the first resin layer, the infrared reflective layer, and the second resin layer are arranged side by side in this order, the first resin layer is wedge-like, and the second resin layer is wedge-like.

Since the aforementioned configuration is provided, the interlayer film according to the present invention is excellent in heat shielding property, and is capable of suppressing multiple images in a head-up display, and providing better image display.

The interlayer film according to the present invention is preferably an interlayer film for use in a laminated glass that is a head-up display, and preferably has a region for display corresponding to a display region of the head-up display. It is preferred that the interlayer film according to the present invention be an interlayer film that can be used in a laminated glass that is a head-up display.

The interlayer film according to the present invention is used while being arranged between a first lamination glass member and a second lamination glass member. The interlayer film according to the present invention may be used together with a wedge-like first lamination glass member, or may be used together with a rectangular first lamination glass member. The interlayer film according to the present invention may be used together with a wedge-like second lamination glass member, or may be used together with a rectangular second lamination glass member. Since the interlayer film according to the present invention is provided with the aforementioned configuration, the aforementioned effects can be exerted even when the interlayer film is used together with a rectangular first lamination glass member. Since the interlayer film according to the present invention is provided with the aforementioned configuration, the aforementioned effects can be exerted even when the interlayer film is used together with a rectangular second lamination glass member.

From the viewpoint of effectively suppressing multiple images in a head-up display, and effectively providing better image display, the wedge angle of the first resin layer is preferably 0 mrad or more (not being wedge-like at 0 mrad), more preferably 0.15 mrad or more, and further preferably 0.20 mrad or more. From the viewpoint of effectively suppressing multiple images in a head-up display, and effectively providing better image display, the wedge angle of the first resin layer is preferably 2.0 mrad or less, and more preferably 1.5 mrad or less.

From the viewpoint of effectively suppressing multiple images in a head-up display, and effectively providing better image display, the wedge angle of the second resin layer is preferably 0 mrad or more (not being wedge-like at 0 mrad), more preferably 0.15 mrad or more, and further preferably 0.20 mrad or more. From the viewpoint of effectively suppressing multiple images in a head-up display, and effectively providing better image display, the wedge angle of the second resin layer is preferably 2.0 mrad or less, and more preferably 1.5 mrad or less.

In the interlayer film according to the present invention, the aforementioned effects of the present invention can be exerted by controlling the shapes of the first resin layer and the second resin layer.

From the viewpoint of further suppressing multiple images, it is preferred that the laminated glass have a portion where the wedge angle varies from the one end side toward the other end side. From the viewpoint of further suppressing multiple images, further suppressing a transmitted double image, and reducing the production cost, it is preferred that the laminated glass have a portion where the wedge angle decreases from the one end side toward the other end side.

From the viewpoint of further suppressing multiple images, it is preferred that the interlayer film have a portion where the wedge angle varies from the one end side toward the other end side. From the viewpoint of further suppressing multiple images, further suppressing a transmitted double image, and reducing the production cost, it is preferred that the interlayer film have a portion where the wedge angle decreases from the one end side toward the other end side.

The wedge angle θ of the laminated glass is an interior angle formed at the intersection point between a straight line connecting a point on the first surface (one surface) of the maximum thickness part in the laminated glass and a point on the first surface of the minimum thickness part in the laminated glass and a straight line connecting a point on the second surface (the other surface) of the maximum thickness part in the laminated glass and a point on the second surface of the minimum thickness part in the laminated glass. When there are a plurality of maximum thickness parts, there are a plurality of minimum thickness parts, the maximum thickness part is located in a certain region, or the minimum thickness part is located in a certain region, the maximum thickness part and the minimum thickness part for determining the wedge angle θ are selected so that the wedge angle θ to be determined is the maximum. Wedge angles of members constituting the laminated glass, and laminates in the laminated glass can be determined in the same manner as that for the wedge angle of the laminated glass.

The wedge angle θ can be approximately calculated in the following manner. Thickness of the interlayer film is measured at each of the maximum thickness part and the minimum thickness part. On the basis of the result of (an absolute value of difference between the thickness in the maximum thickness part and the thickness in the minimum thickness part (µm)/a distance between the maximum thickness part and the minimum thickness part (mm)), a wedge angle θ is approximately calculated.

As a measuring device to be used for measurement of wedge angle and thickness of the laminated glass, the interlayer film, members constituting the laminated glass, and laminates in the laminated glass, a contact-type thickness meter "TOF-4R" (available from Yamabun Electronics Co., Ltd.) and the like can be recited.

Measurement of the thickness is conducted so that the distance is the shortest from the one end toward the other end by using the above-described measuring device at a film conveyance speed of 2.15 mm/minute to 2.25 mm/minute.

As a measuring device to be used for measurement of wedge angles and thicknesses of the interlayer film, members constituting the laminated glass, and laminates in the laminated glass after the interlayer film is made into the laminated glass, a non-contact type multilayer film thickness measuring instrument "OPTIGAUGE" (available from Lumetrics, Inc.) or the like can be recited. The thicknesses of the interlayer film, members constituting the laminated glass, and laminates in the laminated glass can be measured in the form of the laminated glass.

In the configuration 5) and the configuration 15), the distance between two reflected images that are farthest from each other among three reflected images: a first reflected image, a second reflected image, and a third reflected image is 2.5 mm or less. From the viewpoint of effectively suppressing multiple images in a head-up display, and effectively providing better image display, in the configuration 5) and the configuration 15), the distance between two reflected images that are farthest from each other among three reflected images: a first reflected image, a second reflected image, and a third reflected image is preferably 2.0 mm or less, and most preferably 0 mm (three reflected images are coincident).

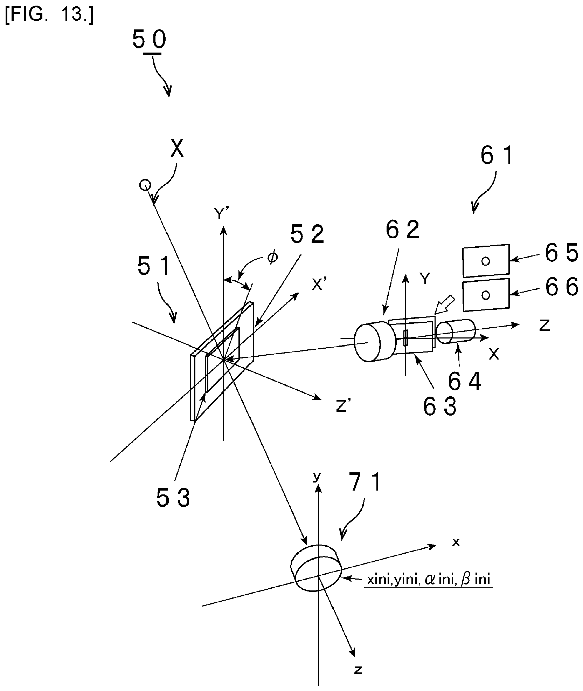

Fig. 13 is a diagram for illustrating an apparatus for measuring a reflected image. A reflected image is measured by using an apparatus 50 shown in Fig. 13.

In Fig. 13, the apparatus 50 has a sample holder 51, an optical source unit 61, and a measuring unit 71. X indicates a point source virtual image.

The sample holder 51 includes a sample holder 52 and a measurement sample 53. The optical source unit 61 includes a projection lens 62, a slit 63, an LED 64 (SUGARCUBE LED#66-032), a pinhole jig 65, and a diffuser unit 66. The pinhole jig 65 is used in camera adjustment. The diffuser unit 66 is used in camera imaging. The size of the slit 63 is 0.01 mm in width and 12.7 mm in length. The measuring unit 71 includes a lens and a camera (Nikon D800E).

In measurement of a reflected image, the light emitted from the optical source unit 61 is caused to enter the sample at an angle of 68.3° using the apparatus 50 shown in Fig. 13. The sample is placed in such a position that the reflected light can be measured by the measuring unit 71, and a point source virtual image is imaged with the camera. The distance between measured virtual images is measured at 300 points, and an average of the 300 points is defined as a distance between multiple images.

Hereinafter, specific embodiments of the present invention will be described with reference to the drawings.

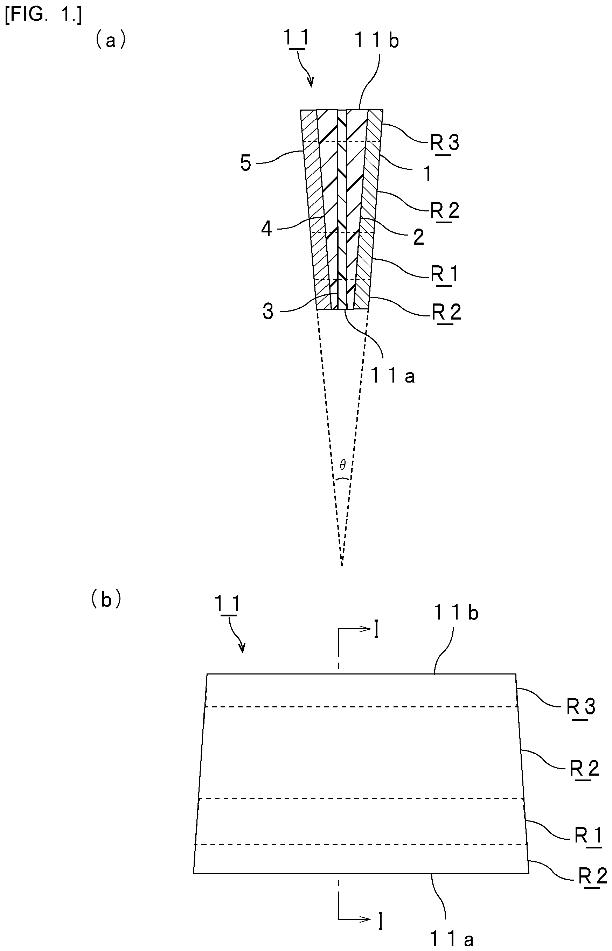

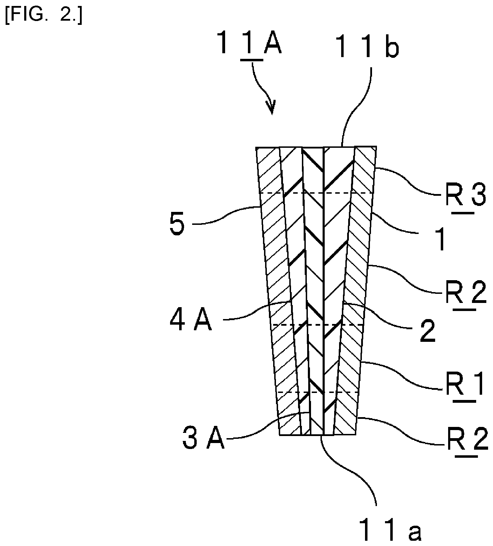

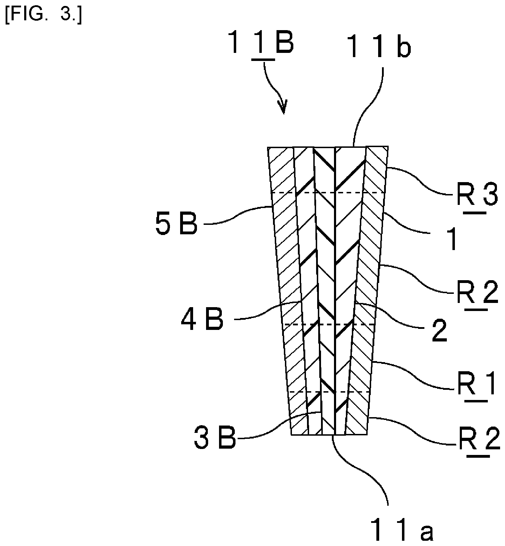

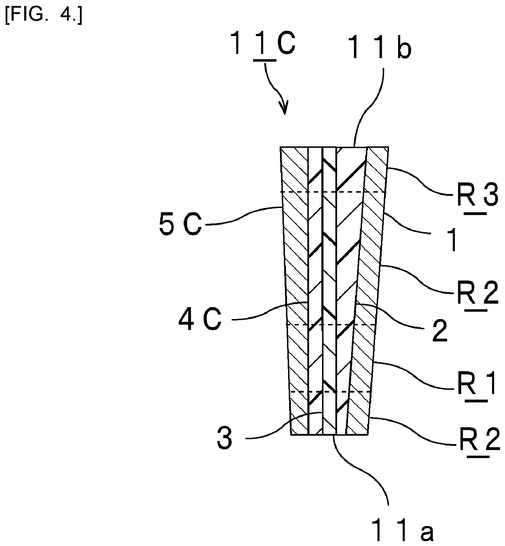

Figs. 1(a) and (b) are a sectional view and a front view, respectively, schematically showing a laminated glass, in accordance with a first embodiment of the present invention. Fig. 1(a) is a sectional view along the line I-I in Fig. 1(b). Fig. 2 is a sectional view schematically showing laminated glass in accordance with a second embodiment of the present invention. Fig. 3 is a sectional view schematically showing a laminated glass in accordance with a third embodiment of the present invention. Fig. 4 is a sectional view schematically showing laminated glass in accordance with a fourth embodiment of the present invention.

The size and dimension of the laminated glass in Fig. 1(a), Fig. 1(b), Fig. 2, Fig. 3, and Fig. 4 and later described drawings are appropriately changed from the actual size and shape for convenience of illustration. In Fig. 1(a), Fig. 1(b), Fig. 2, Fig. 3, and Fig. 4 and later-described drawings, for convenience of illustration, the thickness and the wedge angle (θ) of the laminated glass and each member constituting the laminated glass are shown differently from actual thicknesses and wedge angle. In Fig. 1(a), Fig. 1(b), Fig. 2, Fig. 3, and Fig. 4 and later-described drawings, different points are replaceable.

Fig. 1(a) and Fig. 1(b) show a laminated glass 11. Fig. 2 shows a laminated glass 11A. Fig. 3 shows a laminated glass 11B. Fig. 4 shows a laminated glass 11C. Fig. 1(a), Fig. 2, Fig. 3, and Fig. 4 show sections in the thickness direction of the laminated glass 11, 11A, 11B, 11C.

The laminated glass 11, 11A, 11B, 11C has one end 11a and the other end 11b at the opposite side of the one end 11a. The one end 11a and the other end 11b are end parts of both sides facing each other. The thickness of the other end 11b of the laminated glass 11, 11A, 11B, 11C is larger than the thickness of the one end 11a thereof. Accordingly, the laminated glass 11, 11A, 11B, 11C has a region being thin in thickness and a region being thick in thickness.

The laminated glass 11, 11A, 11B, 11C is a head-up display. The laminated glass 11, 11A, 11B, 11C has a display region R1 of the head-up display.

The laminated glass 11, 11A, 11B, 11C has a surrounding region R2 neighboring the display region R1.

The laminated glass 11, 11A, 11B, 11C has a shading region R3 that is separate from the display region R1. The shading region R3 is located in an edge portion of the laminated glass 11, 11A, 11B, 11C.

The laminated glass 11 shown in Fig. 1(a) and Fig. 1(b) includes a first lamination glass member 1, a first resin layer 2, an infrared reflective layer 3, a second resin layer 4, and a second lamination glass member 5. The first lamination glass member 1, the first resin layer 2, the infrared reflective layer 3, the second resin layer 4, and the second lamination glass member 5 are arranged side by side in this order.

A laminate of the first resin layer 2, the infrared reflective layer 3 and the second resin layer 4 is an interlayer film for laminated glass. The interlayer film for laminated glass is arranged between the first lamination glass member 1 and the second lamination glass member 5. The interlayer film for laminated glass has a region for display corresponding to the display region R1 of the head-up display.

The first resin layer 2 and the second resin layer 4 are wedge-like. The first lamination glass member 1, the infrared reflective layer 3, and the second lamination glass member 5 are rectangular. In each wedge-like member, the sectional shape in the thickness direction of each member is a wedge-like shape. A laminate of the first lamination glass member 1 and the first resin layer 2 is wedge-like. A laminate of the infrared reflective layer 3, the second resin layer 4 and the second lamination glass member 5 is wedge-like.

The laminated glass 11A shown in Fig. 2 includes the first lamination glass member 1, the first resin layer 2, an infrared reflective layer 3A, a second resin layer 4A, and the second lamination glass member 5. The first lamination glass member 1, the first resin layer 2, the infrared reflective layer 3A, the second resin layer 4A, and the second lamination glass member 5 are arranged side by side in this order.

The first resin layer 2, the infrared reflective layer 3A, and the second resin layer 4A are wedge-like. The first lamination glass member 1 and the second lamination glass member 5 are rectangular. A laminate of the first lamination glass member 1 and the first resin layer 2 is wedge-like. A laminate of the infrared reflective layer 3A, the second resin layer 4A and the second lamination glass member 5 is wedge-like.

A laminate of the first resin layer 2, the infrared reflective layer 3A and the second resin layer 4A is an interlayer film for laminated glass. The interlayer film for laminated glass is arranged between the first lamination glass member 1 and the second lamination glass member 5. The interlayer film for laminated glass has a region for display corresponding to the display region R1 of the head-up display.

The laminated glass 11B shown in Fig. 3 includes the first lamination glass member 1, the first resin layer 2, an infrared reflective layer 3B, a second resin layer 4B, and a second lamination glass member 5B. The first lamination glass member 1, the first resin layer 2, the infrared reflective layer 3B, the second resin layer 4B, and the second lamination glass member 5B are arranged side by side in this order.

The first resin layer 2, the infrared reflective layer 3B, the second resin layer 4B, and the second lamination glass member 5B are wedge-like. The first lamination glass member 1 is rectangular. A laminate of the first lamination glass member 1 and the first resin layer 2 is wedge-like. A laminate of the infrared reflective layer 3B, the second resin layer 4B and the second lamination glass member 5B is wedge-like.

A laminate of the first resin layer 2, the infrared reflective layer 3B and the second resin layer 4B is an interlayer film for laminated glass. The interlayer film for laminated glass is arranged between the first lamination glass member 1 and the second lamination glass member 5B. The interlayer film for laminated glass has a region for display corresponding to the display region R1 of the head-up display.

The laminated glass 11C shown in Fig. 4 includes the first lamination glass member 1, the first resin layer 2, the infrared reflective layer 3, a second resin layer 4C, and a second lamination glass member 5C. The first lamination glass member 1, the first resin layer 2, the infrared reflective layer 3, the second resin layer 4C, and the second lamination glass member 5C are arranged side by side in this order.

The first resin layer 2 and the second lamination glass member 5C are wedge-like. The first lamination glass member 1, the infrared reflective layer 3, and the second resin layer 4C are rectangular. A laminate of the first lamination glass member 1 and the first resin layer 2 is wedge-like. A laminate of the infrared reflective layer C, the second resin layer 4C and the second lamination glass member 5C is wedge-like.

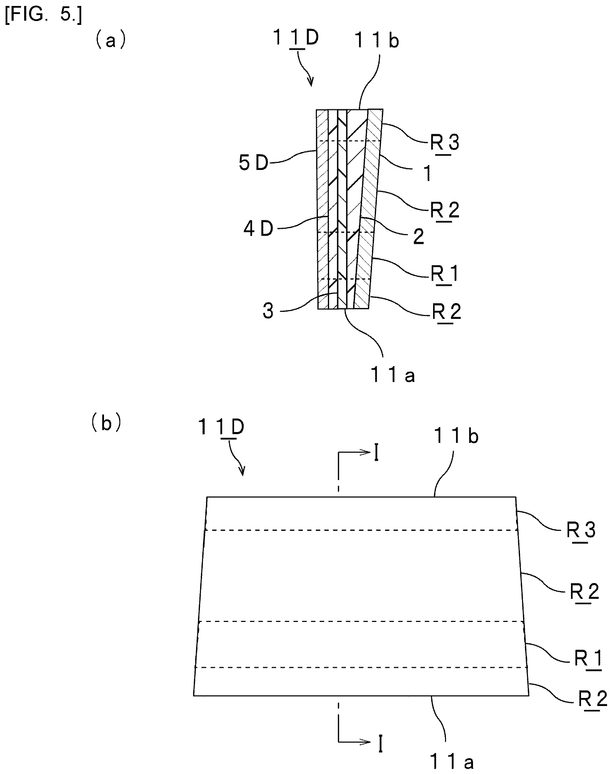

Figs. 5(a) and (b) are a sectional view and a front view, respectively, schematically showing a laminated glass, in accordance with a fifth embodiment of the present invention. Fig. 5(a) is a sectional view along the line I-I in Fig. 5(b).

Fig. 5(a) and Fig. 5(b) show a laminated glass 11D. Fig. 5(a) shows a section in the thickness direction of the laminated glass 11D.

The laminated glass 11D has one end 11a and the other end 11b at the opposite side of the one end 11a. The thickness of the other end 11b of the laminated glass 11D is larger than the thickness of the one end 11a thereof. Accordingly, the laminated glass 11D has a region being thin in thickness and a region being thick in thickness.

The laminated glass 11D is a head-up display. The laminated glass 11D has a display region R1 of the head-up display.

The laminated glass 11D has a surrounding region R2 neighboring the display region R1.

The laminated glass 11D has a shading region R3 that is separate from the display region R1. The shading region R3 is located in an edge portion of the laminated glass 11D.

The laminated glass 11D includes the first lamination glass member 1, the first resin layer 2, the infrared reflective layer 3, a second resin layer 4D, and a second lamination glass member 5D. The first lamination glass member 1, the first resin layer 2, the infrared reflective layer 3, the second resin layer 4D, and the second lamination glass member 5D are arranged side by side in this order.

The first resin layer 2 is wedge-like. The first lamination glass member 1, the infrared reflective layer 3, the second resin layer 4D, and the second lamination glass member 5D are rectangular. A laminate of the first lamination glass member 1 and the first resin layer 2 is wedge-like. A laminate of the infrared reflective layer 3, the second resin layer 4D and the second lamination glass member 5D is rectangular. A laminate of the infrared reflective layer 3, the second resin layer 4D and the second lamination glass member 5D is relatively thin.

The laminate of the infrared reflective layer, the second resin layer and the second lamination glass member may have a wedge-like shape having a relatively small thickness comparable with the thickness of the laminate of the infrared reflective layer 3, the second resin layer 4D and the second lamination glass member 5D in the laminated glass 11D.

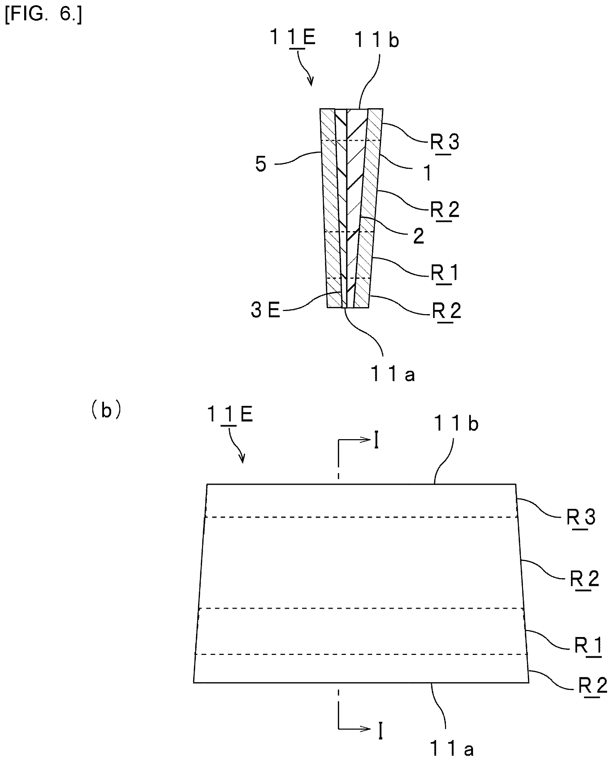

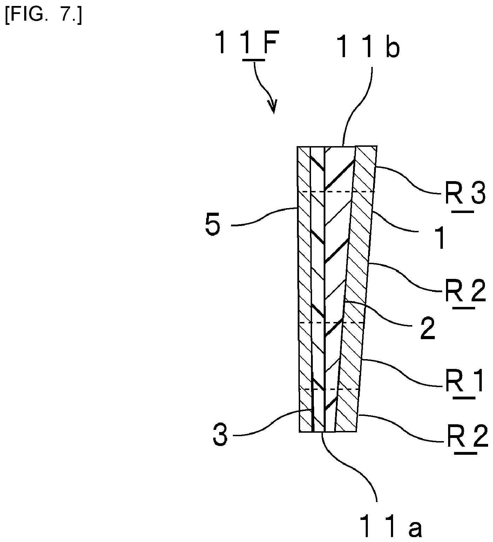

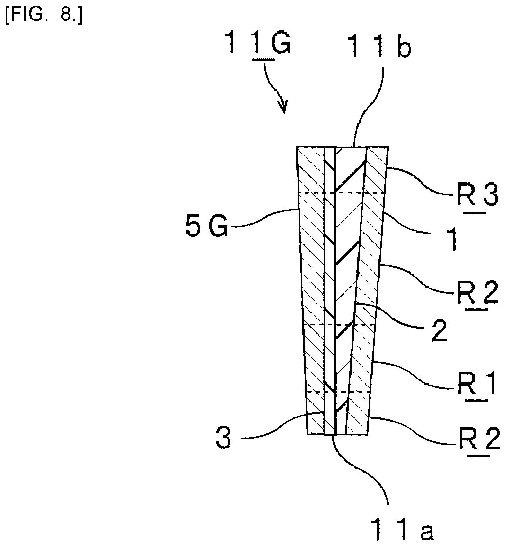

Figs. 6(a) and (b) are a sectional view and a front view, respectively, schematically showing a laminated glass, in accordance with a sixth embodiment of the present invention. Fig. 6(a) is a sectional view along the line I-I in Fig. 6(b). Fig. 7 is a sectional view schematically showing a laminated glass in accordance with a seventh embodiment of the present invention. Fig. 8 is a sectional view schematically showing a laminated glass in accordance with an eighth embodiment of the present invention.

Fig. 6(a) and Fig. 6(b) show a laminated glass 11E. Fig. 7 shows a laminated glass 11F. Fig. 8 shows a laminated glass 11G. Fig. 6(a), Fig. 7, and Fig. 8 show sections in the thickness direction of the laminated glass 11E, 11F, 11G.

The laminated glass 11E, 11F, 11G has one end 11a and the other end 11b at the opposite side of the one end 11a. The one end 11a and the other end 11b are end parts of both sides facing each other. The thickness of the other end 11b of the laminated glass 11E, 11F, 11G is larger than the thickness of the one end 11a thereof. Accordingly, the laminated glass 11E, 11F, 11G has a region being thin in thickness and a region being thick in thickness.

The laminated glass 11E, 11F, 11G is a head-up display. The laminated glass 11E, 11F, 11G has a display region R1 of the head-up display.

The laminated glass 11E, 11F, 11G has a surrounding region R2 neighboring the display region R1.

The laminated glass 11E, 11F, 11G has a shading region R3 that is separate from the display region R1. The shading region R3 is located in an edge portion of the laminated glass 11E, 11F, 11G.

The laminated glass 11E shown in Fig. 6(a) and Fig.6(b) includes the first lamination glass member 1, the first resin layer 2, an infrared reflective layer 3E, and the second lamination glass member 5. The first lamination glass member 1, the first resin layer 2, the infrared reflective layer 3E, and the second lamination glass member 5 are arranged side by side in this order.

A laminate of the first resin layer 2 and the infrared reflective layer 3E is an interlayer film for laminated glass. The interlayer film for laminated glass is arranged between the first lamination glass member 1 and the second lamination glass member 5.

The first resin layer 2 and the infrared reflective layer 3E are wedge-like. The first lamination glass member 1 and the second lamination glass member 5 are rectangular. In each wedge-like member, the sectional shape in the thickness direction of each member is a wedge-like shape. A laminate of the first lamination glass member 1 and the first resin layer 2 is wedge-like. A laminate of the infrared reflective layer 3E and the second lamination glass member 5 is wedge-like.

The laminated glass 11F shown in Fig. 7 includes the first lamination glass member 1, the first resin layer 2, the infrared reflective layer 3, and the second lamination glass member 5. The first lamination glass member 1, the first resin layer 2, the infrared reflective layer 3, and the second lamination glass member 5 are arranged side by side in this order.

The first resin layer 2 is wedge-like. The first lamination glass member 1, the infrared reflective layer 3, and the second lamination glass member 5 are rectangular. A laminate of the first lamination glass member 1 and the first resin layer 2 is wedge-like. A laminate of the infrared reflective layer 3 and the second lamination glass member 5 is rectangular. A laminate of the infrared reflective layer 3 and the second lamination glass member 5 is relatively thin.

The laminated glass 11G shown in Fig. 8 includes the first lamination glass member 1, the first resin layer 2, the infrared reflective layer 3, and a second lamination glass member 5G. The first lamination glass member 1, the first resin layer 2, the infrared reflective layer 3, and the second lamination glass member 5G are arranged side by side in this order.

The first resin layer 2 and the second lamination glass member 5G are wedge-like. The first lamination glass member 1 and the infrared reflective layer 3 are rectangular. A laminate of the first lamination glass member 1 and the first resin layer 2 is wedge-like. A laminate of the infrared reflective layer 3 and the second lamination glass member 5G is wedge-like.

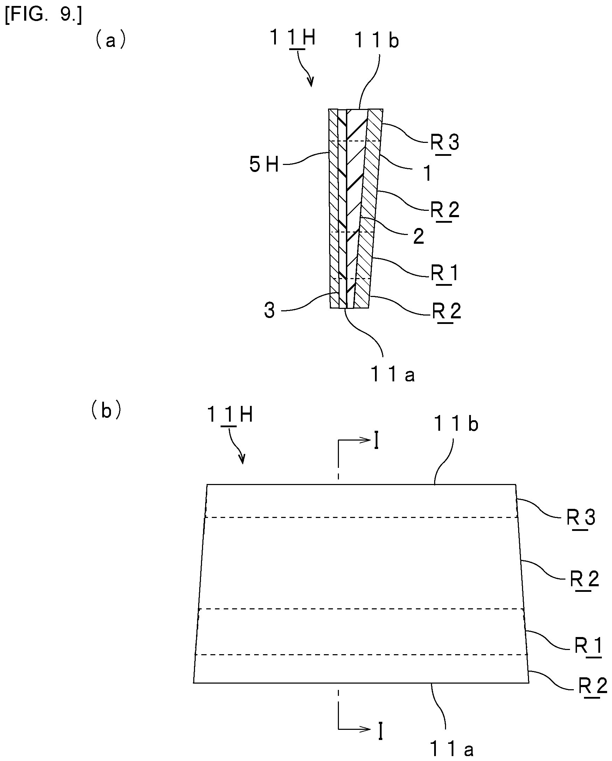

Figs. 9(a) and (b) are a sectional view and a front view, respectively, schematically showing a laminated glass, in accordance with a ninth embodiment of the present invention. Fig. 9(a) is a sectional view along the line I-I in Fig. 9(b).

Fig. 9(a) and Fig. 9(b) show a laminated glass 11H. Fig. 9(a) shows a section in the thickness direction of the laminated glass 11H.

The laminated glass 11H has one end 11a and the other end 11b at the opposite side of the one end 11a. The thickness of the other end 11b of the laminated glass 11H is larger than the thickness of the one end 11a thereof. Accordingly, the laminated glass 11H has a region being thin in thickness and a region being thick in thickness.

The laminated glass 11H is a head-up display. The laminated glass 11H has a display region R1 of the head-up display.

The laminated glass 11H has a surrounding region R2 neighboring the display region R1.

The laminated glass 11H has a shading region R3 that is separate from the display region R1. The shading region R3 is located in an edge portion of the laminated glass 11H.

The laminated glass 11H includes the first lamination glass member 1, the first resin layer 2, the infrared reflective layer 3, and a second lamination glass member 5H. The first lamination glass member 1, the first resin layer 2, the infrared reflective layer 3, and the second lamination glass member 5H are arranged side by side in this order.

The first resin layer 2 is wedge-like. The first lamination glass member 1, the infrared reflective layer 3, and the second lamination glass member 5H are rectangular. A laminate of the first lamination glass member 1 and the first resin layer 2 is wedge-like. A laminate of the infrared reflective layer 3 and the second lamination glass member 5H is rectangular. A laminate of the infrared reflective layer 3 and the second lamination glass member 5H is relatively thin.

The laminate of the infrared reflective layer and the second lamination glass member may have a wedge-like shape having a relatively small thickness comparable with the thickness of the laminate of the infrared reflective layer 3 and the second lamination glass member 5H in the laminated glass 11H.

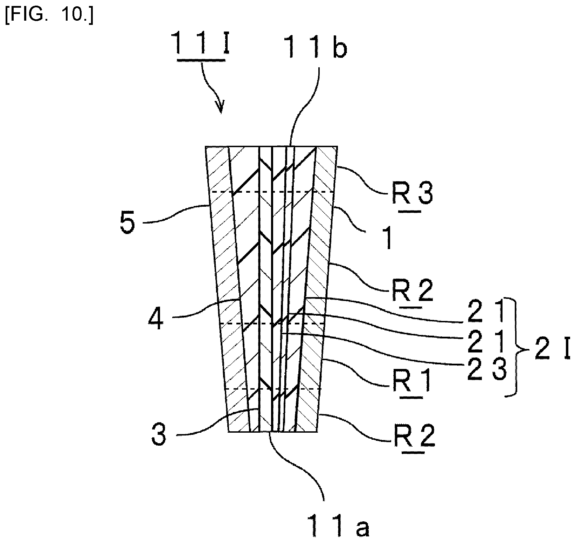

A laminated glass 11I shown in Fig. 10 includes the first lamination glass member 1, a first resin layer 2I, the infrared reflective layer 3, the second resin layer 4, and the second lamination glass member 5. The first lamination glass member 1, the first resin layer 21, the infrared reflective layer 3, the second resin layer 4, and the second lamination glass member 5 are arranged side by side in this order.

A laminate of the first resin layer 21, the infrared reflective layer 3 and the second resin layer 4 is an interlayer film for laminated glass. The interlayer film for laminated glass is arranged between the first lamination glass member 1 and the second lamination glass member 5. The interlayer film for laminated glass has a region for display corresponding to the display region R1 of the head-up display.

The first resin layer 2I has a two or more-layer structure. Specifically, the first resin layer 2I has a three-layer structure including a layer 21, a layer 22 and a layer 23.

The first resin layer 2I and the second resin layer 4 are wedge-like. The first lamination glass member 1, the infrared reflective layer 3, and the second lamination glass member 5 are rectangular. In each wedge-like member, the sectional shape in the thickness direction of each member is a wedge-like shape. A laminate of the first lamination glass member 1 and the first resin layer 2I is wedge-like. A laminate of the infrared reflective layer 3, the second resin layer 4 and the second lamination glass member 5 is wedge-like.

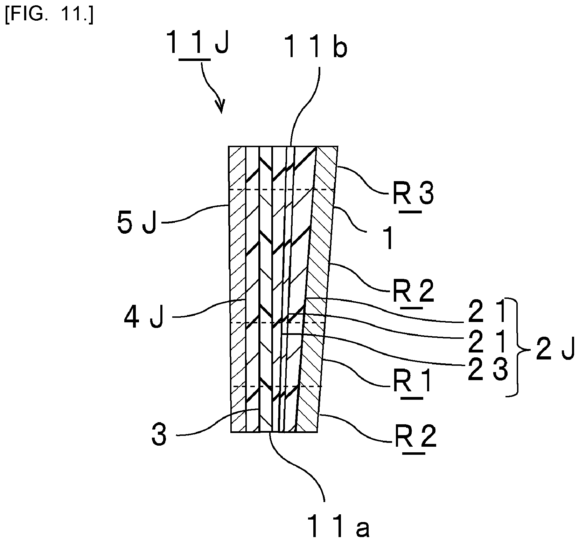

A laminated glass 11J shown in Fig. 11 includes the first lamination glass member 1, a first resin layer 2J, the infrared reflective layer 3, a second resin layer 4J, and a second lamination glass member 5J. The first lamination glass member 1, the first resin layer 2J, the infrared reflective layer 3, the second resin layer 4J, and the second lamination glass member 5J are arranged side by side in this order.

The first resin layer 2J has a two or more-layer structure. Specifically, the first resin layer 2J has a three-layer structure including the layer 21, the layer 22 and the layer 23.

The first resin layer 2J is wedge-like. The first lamination glass member 1, the infrared reflective layer 3, the second resin layer 4J, and the second lamination glass member 5J are rectangular. A laminate of the first lamination glass member 1 and the first resin layer 2J is wedge-like. A laminate of the infrared reflective layer 3, the second resin layer 4J and the second lamination glass member 5J is rectangular. A laminate of the infrared reflective layer 3, the second resin layer 4J and the second lamination glass member 5J is relatively thin.

The laminate of the infrared reflective layer, the second resin layer and the second lamination glass member may have a wedge-like shape having a relatively small thickness comparable with the thickness of the laminate of the infrared reflective layer 3, the second resin layer 4J and the second lamination glass member 5J in the laminated glass 11J.

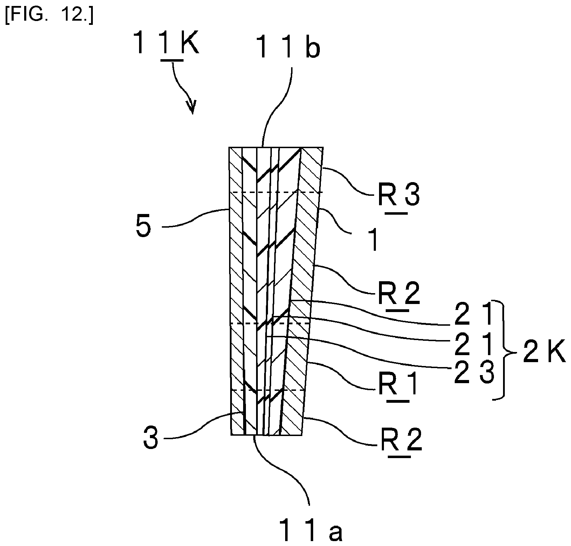

A laminated glass 11K shown in Fig. 12 includes the first lamination glass member 1, a first resin layer 2K, the infrared reflective layer 3, and the second lamination glass member 5. The first lamination glass member 1, the first resin layer 2K, the infrared reflective layer 3, and the second lamination glass member 5 are arranged side by side in this order.

The first resin layer 2K has a two or more-layer structure. Specifically, the first resin layer 2K has a three-layer structure including the layer 21, the layer 22 and the layer 23.

The first resin layer 2K is wedge-like. The first lamination glass member 1, the infrared reflective layer 3, and the second lamination glass member 5 are rectangular. A laminate of the first lamination glass member 1 and the first resin layer 2K is wedge-like. A laminate of the infrared reflective layer 3 and the second lamination glass member 5 is rectangular. A laminate of the infrared reflective layer 3 and the second lamination glass member 5 is relatively thin.

From the viewpoint of further enhancing the heat shielding property, Tts of the laminated glass measured in conformity with ISO 13837 is preferably 70% or less, more preferably 65% or less, and further preferably 60% or less.

Tts can be calculated by measuring the transmittance/reflectance at a wavelength of 300 nm to 2500 nm in conformity with ISO 13837 by using a spectrophotometer ("U-4100" available from Hitachi High-Tech Science Corporation).

The laminated glass according to the present invention has one end and the other end being at the opposite side of the one end. The one end and the other end are end parts of both sides facing each other in the laminated glass. It is preferred that the thickness of the other end be larger than the thickness of the one end in the laminated glass according to the present invention.

The interlayer film according to the present invention has one end and the other end being at the opposite side of the one end. The one end and the other end are end parts of both sides facing each other in the interlayer film. It is preferred that the thickness of the other end be larger than the thickness of the one end in the interlayer film according to the present invention.

From the viewpoint of suppressing the multiple images more effectively, it is preferred that the laminated glass according to the present invention have the display region in a region between a position of 6 cm from the one end toward the other end and a position of 63.8 cm from the one end toward the other end. The display region may exist in a part or the whole of the region from a position of 6 cm from the one end toward the other end to a position of 63.8 cm from the one end toward the other end.

From the viewpoint of suppressing the multiple images more effectively, it is preferred that the interlayer film according to the present invention have the region for display in a region between a position of 6 cm from the one end toward the other end and a position of 63.8 cm from the one end toward the other end. The region for display may exist in a part or the whole of the region between a position of 6 cm from the one end toward the other end and a position of 63.8 cm from the one end toward the other end.

It is preferred that the laminated glass have a portion with a sectional shape in the thickness direction of a wedge-like shape. It is preferred that the sectional shape in the thickness direction of the display region be a wedge-like shape. It is preferred that the interlayer film have a portion with a sectional shape in the thickness direction of a wedge-like shape. It is preferred that the sectional shape in the thickness direction of the display region be a wedge-like shape.

From the viewpoint of suppressing the double images effectively, it is preferred that the laminated glass have a portion with a sectional shape in the thickness direction of a wedge-like shape in the region between a position of 6 cm toward the other end from the one end and a position of 63.8 cm toward the other end from the one end. The portion with a sectional shape in the thickness direction of a wedge-like shape may exist in a part or the whole of the region to the position of 63.8 cm from the one end toward the other end.

From the viewpoint of suppressing the double images effectively, it is preferred that the interlayer film have a portion with a sectional shape in the thickness direction of a wedge-like shape in the region between a position of 6 cm toward the other end from the one end and a position of 63.8 cm toward the other end from the one end. The portion with a sectional shape in the thickness direction of a wedge-like shape may exist in a part or the whole of the region to the position of 63.8 cm from the one end toward the other end.

The laminated glass according to the present invention may have a shading region. The shading region may be separate from the display region. The shading region is provided so as to prevent a driver from feeling glare while driving, for example, by sunlight or outdoor lighting. The shading region can be provided so as to impart the heat blocking property. It is preferred that the shading region be located in an edge portion of the laminated glass. It is preferred that the shading region be belt-shaped.

In the shading region, a coloring agent or a filler may be used so as to change the color and the visible light transmittance. The coloring agent or the filler may be contained in a partial region in the thickness direction of the laminated glass or may be contained in the entire region in the thickness direction of the laminated glass.

From the viewpoint of providing better display, and further broadening the field of view, the visible light transmittance of the display region is preferably 80% or more, more preferably 88% or more, further preferably 90% or more. It is preferred that the visible light transmittance of the display region be higher than the visible light transmittance of the shading region. The visible light transmittance of the display region may be lower than the visible light transmittance of the shading region. The visible light transmittance of the display region is higher than the visible light transmittance of the shading region preferably by 50% or more, more preferably by 60% or more.

When the visible light transmittance varies in the display region and in the shading region, the visible light transmittance is measured at the center position of the display region and at the center position of the shading region.

The visible light transmittance at a wavelength ranging from 380 nm to 780 nm of a laminated glass can be measured by using a spectrophotometer ("U-4100" available from Hitachi High-Tech Science Corporation) in conformity with JIS R3211:1998. When the visible light transmittance of the laminated glass is measured using the interlayer film according to the present invention, it is preferred that a clear glass having a thickness of 2 mm be used as the glass plate.

It is preferred that the display region have a length direction and a width direction. For excellent versatility of the laminated glass, it is preferred that the width direction of the display region be the direction connecting the one end and the other end. It is preferred that the display region be belt-shaped.

It is preferred that each of the first resin layer and the second resin layer have a MD direction and a TD direction. The first resin layer and the second resin layer are obtained, for example, by melt extrusion molding. The MD direction is a machine direction of the resin layer at the time of production of the first resin layer and the second resin layer. The TD direction is a direction perpendicular to the machine direction of the first resin layer and the second resin layer at the time of production of the first resin layer and the second resin layer, and is a direction perpendicular to the thickness direction of the first resin layer and the second resin layer. It is preferred that the one end and the other end be located on either side of the TD direction.

A distance between one end and the other end in the laminated glass and the interlayer film is defined as X. It is preferred that the laminated glass and the interlayer film have a minimum thickness in the region at a distance of 0X to 0.2X inwardly from the one end, and a maximum thickness in the region at a distance of 0X to 0.2X inwardly from the other end. It is more preferred that the laminated glass and the interlayer film have a minimum thickness in the region at a distance of 0X to 0.1X inwardly from the one end, and a maximum thickness in the region at a distance of 0X to 0.1X inwardly from the other end. It is preferred that the laminated glass and the interlayer film have a minimum thickness at the one end and the laminated glass and the interlayer film have a maximum thickness at the other end.

The laminated glass and the interlayer film may have a uniform-thickness part. The uniform-thickness part means that the variation in thickness does not exceed 10 µm per a distance range of 10 cm in the direction connecting the one end and the other end of the laminated glass and the interlayer film. Therefore, the uniform-thickness part refers to the part in which the variation in thickness does not exceed 10 µm per a distance range of 10 cm in the direction connecting the one end and the other end of the laminated glass and the interlayer film. To be more specific, the uniform-thickness part refers to the part where the thickness does not vary at all in the direction connecting the one end and the other end of the laminated glass and the interlayer film, or the thickness varies by 10 µm or less per a distance range of 10 cm in the direction connecting the one end and the other end of the laminated glass and the interlayer film.

The distance X between one end and the other end of the laminated glass and the interlayer film is preferably 3 m or less, more preferably 2 m or less, especially preferably 1.5 m or less, and preferably 0.5 m or more, more preferably 0.8 m or more, and especially preferably 1 m or more.

Hereinafter, other details of members constituting the laminated glass according to the present invention are described.

### (Infrared reflective layer)

The infrared reflective layer reflects infrared rays. The infrared reflective layer is not particularly limited as long as it has the property of reflecting infrared rays.

Examples of the infrared reflective layer include a resin film with metal foil, a multilayer laminate film in which a metal layer and a dielectric layer are formed on a resin layer, a film containing graphite, a multilayer resin film, and a liquid crystal film. These films have the property of reflecting infrared rays.

It is preferred that the infrared reflective layer be a resin film with metal foil, a film containing graphite, a multilayer resin film, or a liquid crystal film. These films are significantly excellent in the infrared reflecting property. Therefore, by using these films, it is possible to obtain a laminated glass having still higher heat shielding property, and capable of keeping the high visible light transmittance for a still longer term.

It is more preferred that the infrared reflective layer be a multilayer resin film or a liquid crystal film. Since these films can transmit electromagnetic waves compared with a resin film with metal foil, an electronic device being used in a vehicle can be used without interference.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin layer is a multilayer laminate film in which any number of layers of the metal layer and the dielectric layer are alternately layered. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

As the material of the resin layer (resin film) in the multilayer laminate film, those exemplified as the material of the resin film in the resin film with metal foil can be exemplified. Examples of the material of the resin layer (resin film) in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to the both faces or either face of the metal layer. Examples of the material of the coating layer include ZnO, Al₂O₃, Ga₂O₃, InO₃, MgO, Ti, NiCr and Cu.

Examples of the dielectric layer in the multilayer laminate film include indium oxide.

The multilayer resin film is a laminate film in which a plurality of resin films are layered. As the material of the multilayer resin film, those exemplified as the material of the resin layer (resin film) in the multilayer laminate film can be exemplified. The number of layered resin films in the multilayer resin film is 2 or more, and may be 3 or more, or may be 5 or more. The number of layered resin films in the multilayer resin film may be 1000 or less, and may be 100 or less, or may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The laminate of the infrared reflective layer and the second lamination glass member may be a second lamination glass member with metal foil. In this case, the metal foil functions as the infrared reflective layer.

For excellent performance of reflecting infrared rays, it is preferred that the infrared reflective layer have such a property that the infrared transmittance is 40% or less at at least one wavelength within the range of 800 nm to 2000 nm. The infrared transmittance of the infrared reflective layer used in the later-described example satisfies the aforementioned preferred requirement. At at least one wavelength within the range of 800 nm to 2000 nm, the infrared transmittance is more preferably 30% or less, and further preferably 20% or less.

Transmittance at each wavelength within the wavelength range of 800 nm to 2000 nm of the infrared reflective layer is specifically measured in the following manner. A single infrared reflective layer is prepared. Spectral transmittance at each wavelength within the wavelength of 800 nm to 2000 nm of the infrared reflective layer is obtained by using a spectrophotometer ("U-4100" available from Hitachi High-Tech Science Corporation) in conformity with JIS R3106:1998.

From the viewpoint of effectively enhancing the heat shielding property of the laminated glass, the infrared reflectance at a wavelength of 800 nm to 1200 nm of the infrared reflective layer is preferably 20% or more, more preferably 22% or more, and further preferably 25% or more.

The infrared reflectance at a wavelength of 800 nm to 1200 nm of the infrared reflective layer is specifically measured in the following manner. Reflectance at each wavelength within the wavelength of 800 nm to 1200 nm of the infrared reflective layer is obtained by using a spectrophotometer ("U-4100" available from Hitachi High-Tech Science Corporation) in conformity with JIS R3106:1998. Of the values of reflectance at each wavelength, it is preferred that the lowest value of reflectance be the above lower limit or more.

From the viewpoint of effectively enhancing the transparency of the laminated glass, the visible light transmittance at a wavelength of 380 nm to 780 nm of the infrared reflective layer is preferably 20% or more, more preferably 50% or more, and further preferably 70% or more.

The visible light transmittance is measured at a wavelength ranging from 380 nm to 780 nm by using a spectrophotometer ("U-4100" available from Hitachi High-Tech Corporation) in conformity with JIS R3211:1998.

### (First and second lamination glass members)

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first and second lamination glass members be a glass plate or a PET (polyethylene terephthalate) film and the laminated glass include at least one glass plate as the first and second lamination glass members. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured plate glass, net plate glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

It is preferred that each of the first lamination glass member and the second lamination glass member be clear glass or heat-ray absorbing plate glass. It is preferred that the first lamination glass member be clear glass because the clear glass is high in infrared transmittance, and provides the laminated glass with higher heat shielding property. It is preferred that the second lamination glass member be heat ray-absorbing plate glass because the heat ray-absorbing plate glass is low in infrared transmittance, and provides the laminated glass with higher heat shielding property. It is preferred that the heat-ray absorbing plate glass be green glass. It is preferred that the first lamination glass member be clear glass, and the second lamination glass member be heat-ray absorbing plate glass. The heat-ray absorbing plate glass is heat-ray absorbing plate glass conforming to JIS R3208.

### (First resin layer and second resin layer)

In the present description, "first resin layer" means the entire resin layer arranged between the first lamination glass member and the infrared reflective layer. In the present description, "second resin layer" means the entire resin layer arranged between the second lamination glass member and the infrared reflective layer.

The first resin layer may have a structure of only one layer, may have a two or more-layer structure, may have a three-layer structure, or may have a three or more-layer structure. The first resin layer may be a single layer or may be a multilayer of two or more layers. The second resin layer may have a structure of only one layer, may have a two or more-layer structure, may have a three-layer structure, or may have a three or more-layer structure. The second resin layer may be a single layer or may be a multilayer of two or more layers. The sound insulating property of the laminated glass can be enhanced when the first resin layer or the second resin layer is a multilayer.

### Resin:

The first resin layer contains a resin (hereinafter, sometimes described as a resin (1)). It is preferred that the first resin layer contain a polyvinyl acetal resin (hereinafter, sometimes described as a polyvinyl acetal resin (1)) as the resin (1). The second resin layer contains a resin (hereinafter, sometimes described as a resin (2)). It is preferred that the second resin layer contain a polyvinyl acetal resin (hereinafter, sometimes described as a polyvinyl acetal resin (2)) as the resin (2).

The resin (1) and the resin (2) may be the same as or different from each other. One kind of each of the resin (1) and the resin (2) may be used alone, and two or more kinds thereof may be used in combination. One kind of each of the polyvinyl acetal resin (1) and the polyvinyl acetal resin (2) may be used alone, and two or more kinds thereof may be used in combination.

Examples of the resin include a polyvinyl acetal resin, a (meth)acryl polymer resin, an ethylene-vinyl acetate copolymer resin, an ethylene-acrylic acid copolymer resin, a polyurethane resin, a polyvinyl alcohol resin, a polyolefin resin, a polyvinyl acetate resin, and a polystyrene resin. Resins other than these may be used.

It is preferred that the resin be a polyvinyl acetal resin. By using a polyvinyl acetal resin and a plasticizer together, the adhesive force of the resin layer to other layer such as a lamination glass member or an infrared reflective layer is further enhanced.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, still more preferably 1500 or more, further preferably 1600 or more, especially preferably 2600 or more, most preferably 2700 or more, preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of a resin layer is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the resin layer is sufficiently lowered.

The aldehyde is not particularly limited. In general, an aldehyde with 1 to 10 carbon atoms is preferably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

A content of the hydroxyl group (the amount of hydroxyl groups) of the polyvinyl acetal resin is preferably 15% by mole or more, more preferably 18% by mole or more, further preferably 20% by mole or more, and especially preferably 28% by mole or more, and is preferably 40% by mole or less, more preferably 35% by mole or less, and further preferably 32% by mole or less. When the content of the hydroxyl group is the above lower limit or more, the adhesive force of the resin layer further increases. Moreover, when the content of the hydroxyl group is the above upper limit or less, the flexibility of the resin layer is enhanced and the handling of the resin layer is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in conformity with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more and is preferably 30% by mole or less, more preferably 25% by mole or less, further preferably 20% by mole or less, especially preferably 15% by mole or less, most preferably 3% by more or less. When the acetylation degree is the above lower limit or more, the compatibility between the polyvinyl acetal resin and a plasticizer is enhanced. When the acetylation degree is the above upper limit or less, the moisture resistance of the laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### Plasticizer:

From the viewpoint of further enhancing the adhesive force of the resin layer, it is preferred that the first resin layer contain a plasticizer (hereinafter, sometimes described as a plasticizer (1)). From the viewpoint of further enhancing the adhesive force of the resin layer, it is preferred that the second resin layer contain a plasticizer (hereinafter, sometimes described as a plasticizer (2)). It is especially preferred that the resin layer contain a plasticizer when the resin contained in the resin layer is a polyvinyl acetal resin. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

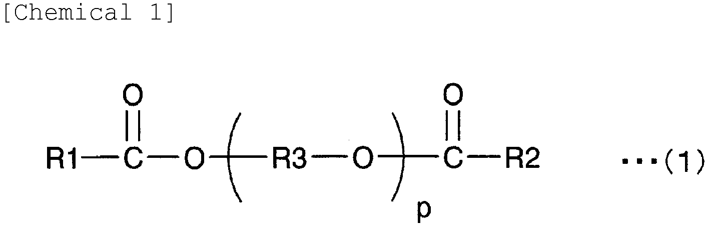

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH) and it is more preferred that the plasticizer include triethylene glycol di-2-ethylhexanoate.

The content of the plasticizer is not particularly limited. In the layer containing a plasticizer (the first resin layer, or the second resin layer), the content of the plasticizer is preferably 25 parts by weight or more, more preferably 30 parts by weight or more, and further preferably 35 parts by weight or more per 100 parts by weight of the resin. In the layer containing a plasticizer (the first resin layer, or the second resin layer), the content of the plasticizer is preferably 75 parts by weight or less, more preferably 60 parts by weight or less, further preferably 50 parts by weight or less, and especially preferably 40 parts by weight or less per 100 parts by weight of the resin. When the content of the plasticizer is the above lower limit or more, the penetration resistance of laminated glass is further enhanced. When the content of the plasticizer is the above upper limit or less, the transparency of laminated glass is further enhanced.

### Heat shielding substance:

It is preferred that the first resin layer contain a heat shielding substance. It is preferred that the second resin layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding compound may be constituted of both of the Ingredient X and the heat shielding particles.

It is preferred that the first resin layer contain at least one kind of Ingredient X among a phthalocyanine compound, a naphthalocyanine compound, and an anthracyanine compound. It is preferred that the second resin layer contain the Ingredient X. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

From the viewpoint of further enhancing the heat shielding property of the laminated glass, it is preferred that the Ingredient X be phthalocyanine, a derivative of phthalocyanine, naphthalocyanine or a derivative of naphthalocyanine, and it is more preferred that the Ingredient X be phthalocyanine or a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding property of the laminated glass, it is preferred that the Ingredient X have a structural unit in which an oxygen atom is bonded to a vanadium atom.

In 100% by weight of the layer containing Ingredient X (the first resin layer or the second resin layer), the content of the Ingredient X is preferably 0.001% by weight or more, more preferably 0.005% by weight or more, further preferably 0.01% by weight or more, especially preferably 0.02% by weight or more. In 100% by weight of the layer containing Ingredient X (the first resin layer or the second resin layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

It is preferred that the first resin layer contain the heat shielding particles. It is preferred that the second resin layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding property of the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the laminated glass, cesium-doped tungsten oxide particles are especially preferred. From the viewpoint of further enhancing the heat shielding property of the laminated glass, it is preferred that the cesium-doped tungsten oxide particles be tungsten oxide particles represented by the formula: CS_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the layer containing the heat shielding particles (the first resin layer or the second resin layer), the content of the heat shielding particles is preferably 0.01% by weight or more, more preferably 0.1% by weight or more, further preferably 1% by weight or more, especially preferably 1.5% by weight or more. In 100% by weight of the layer containing the heat shielding particles (the first resin layer or the second resin layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### Metal salt:

It is preferred that the first resin layer contain an alkali metal salt, an alkaline earth metal salt or a metal salt which is a magnesium salt (hereinafter, these are sometimes described as Metal salt M). It is preferred that the second resin layer contain the Metal salt M. By the use of the Metal salt M, it becomes easy to control the adhesivity between the resin layer, and the infrared reflective layer and a lamination glass member. One kind of the Metal salt M may be used alone, and two or more kinds thereof may be used in combination.

It is preferred that the Metal salt M contain metal which is Li, Na, K, Rb, Cs, Mg, Ca, Sr or Ba. It is preferred that the metal salt included in the resin layer contain K or Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the layer containing the Metal salt M (the first resin layer or the second resin layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the resin layer, and the infrared reflective layer and a lamination glass member can be controlled more satisfactorily.

### Ultraviolet ray screening agent:

It is preferred that the first resin layer contain an ultraviolet ray screening agent. It is preferred that the second resin layer contain an ultraviolet ray screening agent. By the use of an ultraviolet ray screening agent, even when the laminated glass is used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the layer containing the ultraviolet ray screening agent (the first resin layer or the second resin layer), the content of the ultraviolet ray screening agent is preferably 0.1% by weight or more, more preferably 0.2% by weight or more, further preferably 0.3% by weight or more, especially preferably 0.5% by weight or more. In 100% by weight of a layer containing the ultraviolet ray screening agent (the first resin layer or the second resin layer), the content of the ultraviolet ray screening agent is preferably 2.5% by weight or less, more preferably 2% by weight or less, further preferably 1% by weight or less, especially preferably 0.8% by weight or less. When the content of the ultraviolet ray screening agent is the above-described lower limit or more and the above-described upper limit or less, deterioration in visible light transmittance after a lapse of a period is further suppressed. In particular, by setting the content of the ultraviolet ray screening agent to be 0.2% by weight or more in 100% by weight of a layer containing the ultraviolet ray screening agent, the lowering in visible light transmittance of the laminated glass after the lapse of a certain period of time can be significantly suppressed.

### Oxidation inhibitor:

It is preferred that the first resin layer contain an oxidation inhibitor. It is preferred that the second resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

In order to maintain high visible light transmittance of the laminated glass over a long period of time, it is preferred that the content of the oxidation inhibitor be 0.1% by weight or more in 100% by weight of the layer containing the oxidation inhibitor (the first resin layer or the second resin layer). Moreover, it is preferred that the content of the oxidation inhibitor be 2% by weight or less in 100% by weight of the layer containing the oxidation inhibitor.

### Other ingredients:

Each of the first resin layer and the second resin layer may contain additives such as a coupling agent, a dispersing agent, a surfactant, a flame retardant, an antistatic agent, a pigment, a dye, an adhesive force regulator other than metal salt, a moisture-resistance agent, a fluorescent brightening agent, and an infrared ray absorber, as necessary. One kind of these additives may be used alone, and two or more kinds thereof may be used in combination.

### (Method for installing laminated glass)

A method for installing the laminated glass according to the present invention is a method of installing the above-described laminated glass to an opening of buildings or vehicles, between an exterior space and an interior space to which a heat ray is incident from the exterior space.

To be more specific, the laminated glass is installed to the opening in such a manner that the first lamination glass member is located on a side of the interior space and the second lamination glass member is located on a side of the exterior space. That is, the laminated glass is installed so that the arrangement in the order of interior space/first lamination glass member/first resin layer/infrared reflective layer/(second resin layer/)second lamination glass member/exterior space is achieved. The above arrangement form includes the case where other member is arranged between the interior space and the first lamination glass member, and includes the case where other member is arranged between the exterior space and the second lamination glass member.

### (Head-up display system)

The laminated glass according to the present invention is a laminated glass that is a head-up display, and can be used in a head-up display system. The interlayer film according to the present invention is an interlayer film for laminated glass for use in a laminated glass that is a head-up display, and can be used in a head-up display system. It is preferred that the laminated glass be a laminated glass that can be used in a head-up display system.

The head-up display system includes the laminated glass, and a light source device for irradiating the laminated glass with light for image display. The light source device can be attached, for example, to a dashboard in a building or a vehicle. By irradiating the display region of the laminated glass with light from the light source device, it is possible to achieve image display.

The laminated glass is suitably used for a windshield of a car. It is preferred that the laminated glass be a laminated glass that can be used for a windshield of a car.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Experimental examples of laminated glass having laminate structure of first lamination glass member/first resin layer/infrared reflective layer/second lamination glass member)

### (Examples 1 to 9, 17 and Comparative Examples 1, 3)

### First lamination glass member:

A clear glass having the thickness and the wedge angle shown in the following Tables 1, 2, 4 was prepared. When the wedge angle is 0 mrad, it means that the shape is not wedge-like, but is rectangular.

### First resin layer:

The following ingredients were mixed, and kneaded sufficiently with a mixing roll to obtain a composition for forming a first resin layer.
Polyvinyl acetal resin (average polymerization degree: 1700, content of hydroxyl group: 30.5% by mole, acetylation degree: 1% by mole, acetalization degree: 68.5% by mole): 100 parts by weight
Triethylene glycol di-2-ethylhexanoate (3GO): 40 parts by weight
ITO particles (available from Mitsubishi Materials Corporation): an amount that is to be 0.28% by weight in the obtained first resin layer
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained first resin layer
BHT (2, 6-di-t-butyl-p-cresol) : an amount that is to be 0.2% by weight in the obtained first resin layer

The obtained composition for forming a first resin layer was extruded with an extruder to obtain a first resin layer having the thickness and the wedge angle shown in the following Tables 1, 2, 4.

The first resin layer obtained in Example 17 had a portion with a wedge angle decreasing from the one end side toward the other end side in the region where the sectional shape in the thickness direction is wedge-like, and had a projecting portion at a position of 0.3X from the one end.

### Second lamination glass member with infrared reflective layer (metal foil):

On a clear glass having the thickness and the wedge angle shown in the following Tables 1, 2, 4, an infrared reflective layer (XIR-75 (resin film with metal foil, available from Southwall Technologies "XIR-75")) having the thickness and the wedge angle shown in the following Tables 1, 2, 4 was formed, to obtain a second lamination glass member with an infrared reflective layer. The metal foil in the infrared reflective layer has a five-layer structure of In₂O₃/Ag/In₂O₃/Ag/In₂O₃.

### Preparation of laminated glass:

The first lamination glass member, the first resin layer, the infrared reflective layer, and the second lamination glass member were layered in this order to obtain a laminated glass.

### (Example 18)

### First lamination glass member:

A clear glass having the thickness and the wedge angle shown in the following Table 4 was prepared. When the wedge angle is 0 mrad, it means that the shape is not wedge-like, but is rectangular.

### First resin layer:

The following ingredients were mixed, and kneaded sufficiently with a mixing roll to obtain a composition A for forming a first resin layer (multilayer).
Polyvinyl acetal resin (content of hydroxyl group: 22% by mole, acetylation degree: 13% by mole, acetalization degree: 65% by mole): 100 parts by weight
Triethylene glycol di-2-ethylhexanoate (3GO): 65 parts by weight
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained composition A
BHT (2, 6-di-t-butyl-p-cresol) : an amount that is to be 0.2% by weight in the obtained composition A

The following ingredients were mixed, and kneaded sufficiently with a mixing roll to obtain a composition B for forming a first resin layer (multilayer).
Polyvinyl acetal resin (content of hydroxyl group: 30.5% by mole, acetylation degree: 1% by mole, acetalization degree: 68.5% by mole): 100 parts by weight
Triethylene glycol di-2-ethylhexanoate (3GO): 36 parts by weight
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained composition B
BHT (2, 6-di-t-butyl-p-cresol): an amount that is to be 0.2% by weight in the obtained composition B

The composition A and the composition B were coextruded by using a co-extruder. A first resin layer having a layered structure of the layer formed of the composition B (composition B layer)/the layer formed of the composition A (composition A layer)/the layer formed of the composition B (composition B layer) was obtained. The thickness and the wedge angle of the obtained first resin layer are shown in Table 4.

### Second lamination glass member with infrared reflective layer (metal foil):

On the clear glass having the thickness and the wedge angle shown in the following Table 4, an infrared reflective layer (XIR-75 (resin film with metal foil, available from Southwall Technologies "XIR-75")) having the thickness and the wedge angle shown in the following Table 4 was formed to obtain a second lamination glass member with an infrared reflective layer. The metal foil in the infrared reflective layer has a five-layer structure of In₂O₃/Ag/In₂O₃/Ag/In₂O₃.

### Preparation of laminated glass:

The first lamination glass member, the first resin layer, the infrared reflective layer, and the second lamination glass member were layered in this order to obtain a laminated glass.

### (Comparative Example 2)

A laminated glass was obtained in the same manner as that in Example 1 except that the infrared reflective layer was not used, and the thickness of the second lamination glass member was set as shown in the following Table 1.

### (Experimental examples of laminated glass having laminate structure of first lamination glass member/first resin layer/infrared reflective layer/second resin layer/second lamination glass member)

### (Examples 10 to 16 and Comparative Examples 4, 5)

### First lamination glass member:

A clear glass having the thickness and the wedge angle shown in the following Tables 3, 4 was prepared. When the wedge angle is 0 mrad, it means that the shape is not wedge-like, but is rectangular.

### First resin layer and second resin layer:

The following ingredients were mixed, and kneaded sufficiently with a mixing roll to obtain a composition for forming a first resin layer and a second resin layer.
Polyvinyl acetal resin (average polymerization degree: 1700, content of hydroxyl group: 30.5% by mole, acetylation degree: 1% by mole, acetalization degree: 68.5% by mole): 100 parts by weight
Triethylene glycol di-2-ethylhexanoate (3GO): 40 parts by weight
ITO particles (available from Mitsubishi Materials Corporation): an amount that is to be 0.28% by weight in the obtained first and second resin layers
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained first and second resin layers
BHT (2, 6-di-t-butyl-p-cresol): an amount that is to be 0.2% by weight in the obtained first and second resin layers.

The obtained composition for forming a first resin layer and a second resin layer was extruded with an extruder to obtain a first resin layer and a second resin layer having the thickness and the wedge angle shown in the following Tables 3, 4.

### Infrared reflective layer:

An infrared reflective layer having the kind and the thickness shown in the following Tables 3, 4 was prepared.

XIR-75 (resin film with metal foil, "XIR-75" available from Southwall Technologies). The metal foil in XIR-75 has a five-layer structure of In₂O₃/Ag/In₂O₃/Ag/In₂O₃.

Nano90S (multilayer resin film, "Multilayer Nano 90S" available from Sumitomo 3M Limited)

### Second lamination glass member:

A clear glass having the thickness and the wedge angle shown in the following Tables 3, 4 was prepared. When the wedge angle is 0 mrad, it means that the shape is not wedge-like, but is rectangular.

### Preparation of laminated glass:

The first lamination glass member, the first resin layer, the infrared reflective layer, the second resin layer, and the second lamination glass member were layered in this order to obtain a laminated glass.

### (Examples 19, 20)

### First lamination glass member:

A clear glass having the thickness and the wedge angle shown in the following Table 4 was prepared. When the wedge angle is 0 mrad, it means that the shape is not wedge-like, but is rectangular.

### First resin layer:

The following ingredients were mixed, and kneaded sufficiently with a mixing roll to obtain a composition A for forming a first resin layer (multilayer).
Polyvinyl acetal resin (content of hydroxyl group: 22% by mole, acetylation degree: 13% by mole, acetalization degree: 65% by mole): 100 parts by weight
Triethylene glycol di-2-ethylhexanoate (3GO): 65 parts by weight
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained composition A
BHT (2, 6-di-t-butyl-p-cresol) : an amount that is to be 0.2% by weight in the obtained composition A

The following ingredients were mixed, and kneaded sufficiently with a mixing roll to obtain a composition B for forming a first resin layer (multilayer).
Polyvinyl acetal resin (content of hydroxyl group: 30.5% by mole, acetylation degree: 1% by mole, acetalization degree: 68.5% by mole): 100 parts by weight
Triethylene glycol di-2-ethylhexanoate (3GO): 36 parts by weight
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained composition B
BHT (2,6-di-t-butyl-p-cresol): an amount that is to be 0.2% by weight in the obtained composition B

The composition A and the composition B were coextruded by using a co-extruder. A first resin layer having a layered structure of the layer formed of the composition B (composition B layer)/the layer formed of the composition A (composition A layer)/the layer formed of the composition B (composition B layer) was obtained. The thickness and the wedge angle of the obtained first resin layer are shown in Table 4.

### Second resin layer:

The following ingredients were mixed, and kneaded sufficiently with a mixing roll to obtain a composition for forming a second resin layer.
Polyvinyl acetal resin (average polymerization degree: 1700, content of hydroxyl group: 30.5% by mole, acetylation degree: 1% by mole, acetalization degree: 68.5% by mole): 100 parts by weight
Triethylene glycol di-2-ethylhexanoate (3GO): 40 parts by weight
ITO particles (available from Mitsubishi Materials Corporation): an amount that is to be 0.28% by weight in the obtained second resin layer
Tinuvin 326 (2-(2'-hydroxy-3'-t-butyl-5-methylphenyl)-5-chlorobenzotriazole, "Tinuvin 326" available from BASF Japan Ltd.) : an amount that is to be 0.2 % by weight in the obtained second resin layer
BHT (2, 6-di-t-butyl-p-cresol) : an amount that is to be 0.2% by weight in the obtained second resin layer

The obtained composition for forming a second resin layer was extruded with an extruder to obtain a second resin layer having the thickness and the wedge angle shown in the following Table 4.

### Infrared reflective layer:

An infrared reflective layer having the kind and the thickness shown in the following Table 4 was prepared.

Nano90S (multilayer resin film, "Multilayer Nano 90S" available from Sumitomo 3M Limited)

### Second lamination glass member:

A clear glass having the thickness and the wedge angle shown in the following Table 4 was prepared. When the wedge angle is 0 mrad, it means that the shape is not wedge-like, but is rectangular.

### Preparation of laminated glass:

The first lamination glass member, the first resin layer, the infrared reflective layer, the second resin layer, and the second lamination glass member were layered in this order to obtain a laminated glass.

### (Evaluation)

### (1) Infrared reflectance at wavelength of 800 nm to 1200 nm of infrared reflective layer

The infrared reflectance at a wavelength of 800 nm to 1200 nm of the infrared reflective layer was measured in the following manner. Reflectance at each wavelength within the wavelength of 800 nm to 1200 nm of the infrared reflective layer was measured by using a spectrophotometer ("U-4100" available from Hitachi High-Tech Science Corporation) in conformity with JIS R3106:1998, and the lowest value of reflectance was shown in Table.

### (2) Visible light transmittance at wavelength of 380 nm to 780 nm of infrared reflective layer

The visible light transmittance at a wavelength of 380 nm to 780 nm of the infrared reflective layer was measured at a wavelength of 380 nm to 780 nm by using a spectrophotometer ("U-4100" available from Hitachi High-Tech Corporation) in conformity with JIS R3211:1998.

### (3) Tts of laminated glass measured in conformity with ISO 13837

Tts was calculated by measuring the transmittance/reflectance at a wavelength of 300 nm to 2500 nm by using a spectrophotometer ("U-4100" available from Hitachi High-Tech Science Corporation).

### (4) Multiple images

A reflected image was measured by using the apparatus 50 shown in Fig. 13. The display region of the laminated glass was irradiated with light at an incident angle of 68.3° from outside the first lamination glass member, and a reflected image was observed at a position of 2500 mm from the display region. A distance between a first reflected image (T1) by the first lamination glass member, and a second reflected image (T2) by the infrared reflective layer was measured. A distance between the second reflected image (T2) by the infrared reflective layer and a third reflected image (T3) by the second lamination glass member was measured. A distance between the first reflected image (T1) by the first lamination glass member and the third reflected image (T3) by the second lamination glass member was measured.

### (5) Image display

The display region of the laminated glass was irradiated with light at an incident angle of 68.3° from outside the first lamination glass member, and a display image of a character was observed at a position of 2500 mm from the display region. The image display was judged according to the following criteria.

### [Criterial for judgement in image display]

○○: Display image of character is clearly seen without smear, and character is recognizable
○: Display image of character is seen with slight smear, but character is recognizable
× : Display image of character is seen multiply, and character is difficult to be recognized

The details and the results are shown in the following Tables 1 to 4. Laminated glasses obtained in Examples 18 to 20 were evaluated for the sound insulating property according to the sound transmission loss, and it was confirmed that the laminated glasses were excellent in sound insulating property.

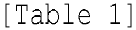

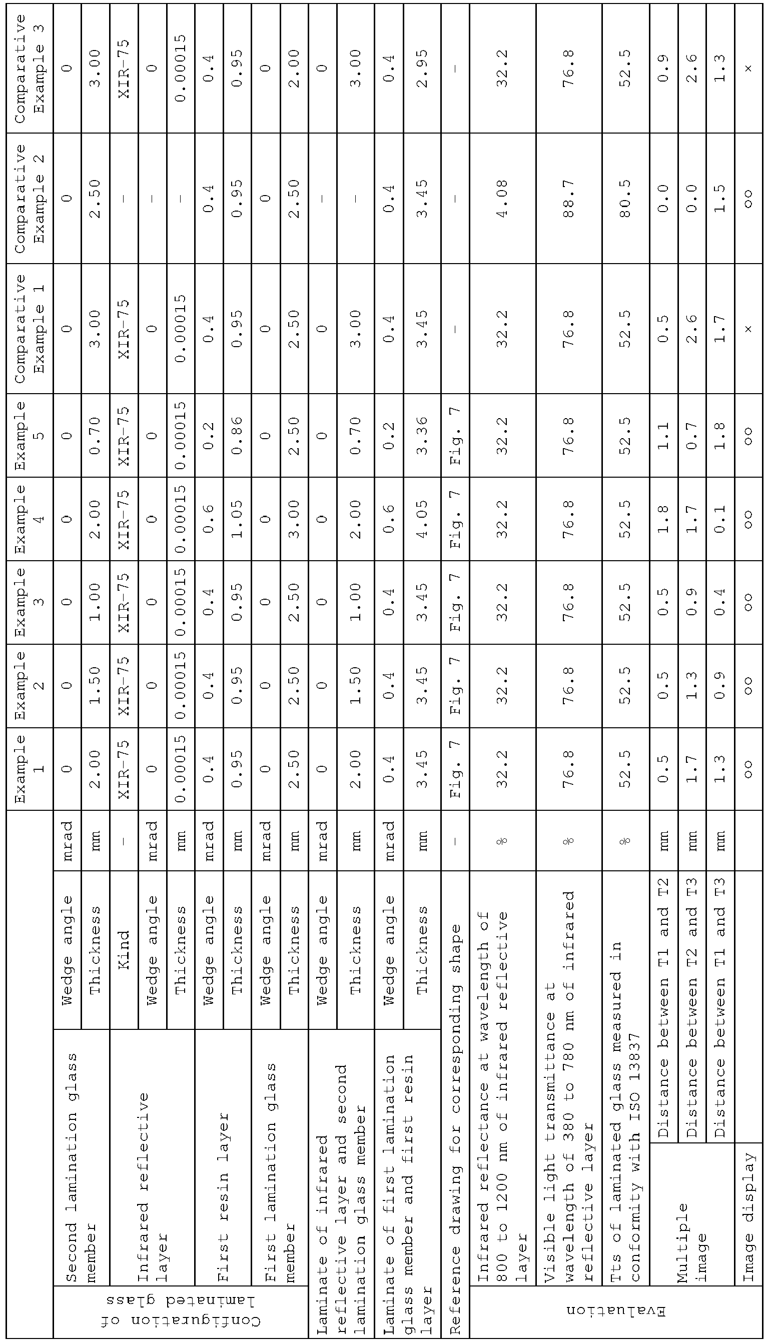

**[Table 2]**

| | | | | Example 6 | Example 7 | Example 8 | Example 9 |
|---|---|---|---|---|---|---|---|
| Configuration of laminated glass | Second lamination glass member | Wedge angle | mrad | 0.4 | 0.2 | 0.4 | 0.6 |
| | | Thickness | mm | 2.50 | 2.50 | 3.00 | 2.50 |
| | Infrared reflective layer | Kind | - | XIR-75 | XIR-75 | XIR-75 | XIR-75 |
| | | Wedge angle | mrad | 0 | 0 | 0 | 0 |
| | | Thickness | mm | 0.00015 | 0.00015 | 0.00015 | 0.00015 |
| | First resin layer | Wedge angle | mrad | 0.4 | 0.4 | 0.4 | 0.6 |
| | | Thickness | mm | 0.95 | 0.95 | 0.95 | 1.05 |
| | First lamination glass member | Wedge angle | mrad | 0 | 0 | 0 | 0 |
| | | Thickness | mm | 2.50 | 2.50 | 2.50 | 3.00 |
| Laminate of infrared reflective layer and second lamination glass member | | Wedge angle | mrad | 0.4 | 0.2 | 0.4 | 0.6 |
| | | Thickness | mm | 2.50 | 2.50 | 3.00 | 2.50 |
| Laminate of first lamination glass member and first resin layer | | Wedge angle | mrad | 0.4 | 0.4 | 0.4 | 0.6 |
| | | Thickness | mm | 3.45 | 3.45 | 3.45 | 4.05 |
| Reference drawing for corresponding shape | | | - | Fig. 8 | Fig. 8 | Fig. 8 | Fig. 8 |
| Evaluation | Infrared reflectance at wavelength of 800 to 1200 nm of infrared reflective layer | | % | 32.2 | 32.2 | 32.2 | 32.2 |
| | Visible light transmittance at wavelength of 380 to 780 nm of infrared reflective layer | | % | 76.8 | 76.8 | 76.8 | 76.8 |
| | Tts of laminated glass measured in conformity with ISO 13837 | | % | 52.5 | 52.5 | 52.5 | 52.5 |
| | Multiple image | Distance between T1 and T2 | mm | 0.5 | 0.5 | 0.5 | 1.8 |
| | | Distance between T2 and T3 | mm | 1.1 | 0.4 | 0.7 | 0.4 |
| | | Distance between T1 and T3 | mm | 1.6 | 0.1 | 1.2 | 1.4 |
| | Image display | | | ○○ | ○○ | ○○ | ○○ |

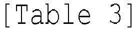

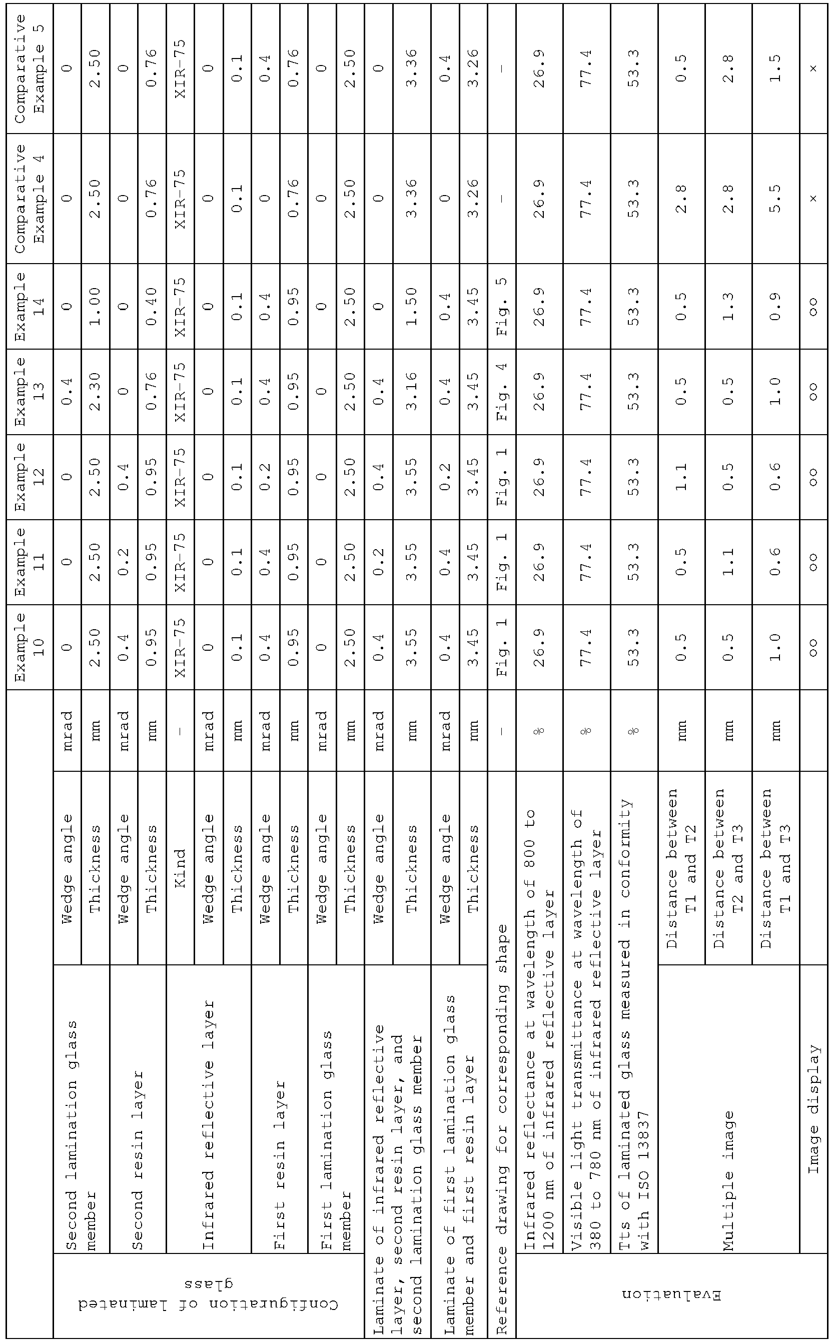

**[Table 4]**

| | | | | | Example 15 | Example 16 | Example 17 | Example 18 | Example 19 | Example 20 |
|---|---|---|---|---|---|---|---|---|---|---|
| Configuration of laminated glass | Second lamination glass member | | Wedge angle | mrad | 0 | 0 | 0 | 0 | 0 | 0 |
| | | | Thickness | mm | 2.50 | 1.00 | 2.00 | 2.00 | 2.50 | 1.00 |
| | Second resin layer | | Wedge angle | mrad | 0.4 | 0 | - | - | 0.4 | 0 |
| | | | Thickness | mm | 0.95 | 0.40 | - | - | 0.95 | 0.40 |
| | Infrared reflective layer | | Kind | - | Nano90S | Nano90S | XIR-75 | XIR-75 | Nano90S | Nano90S |
| | | | Wedge angle | mrad | 0 | 0 | 0 | 0 | 0 | 0 |
| | | | Thickness | mm | 0.1 | 0.1 | 0.00015 | 0.00015 | 0.1 | 0.1 |
| | First resin layer | | Wedge angle | mrad | 0.4 | 0.4 | 0.4 | 0.4 | 0.4 | 0.4 |
| | | | Thickness | mm | 0.95 | 0.95 | 0.95 | 0.95 | 0.95 | 0.95 |
| | First lamination glass member | | Wedge angle | mrad | 0 | 0 | 0 | 0 | 0 | 0 |
| | | | Thickness | mm | 2.50 | 2.50 | 2.50 | 2.50 | 2.50 | 2.50 |
| Laminate of infrared reflective layer, second resin layer, and second lamination glass member, or laminate of infrared reflective layer and second lamination glass member | | | Wedge angle | mrad | 0.4 | 0 | 0 | 0 | 0.4 | 0 |
| | | | Thickness | mm | 3.55 | 1.50 | 2.00 | 2.00 | 3.55 | 1.50 |
| Laminate of first lamination glass member and first resin layer | | | Wedge angle | mrad | 0.4 | 0.4 | 0.4 | 0.4 | 0.4 | 0.4 |
| | | | Thickness | mm | 3.45 | 3.45 | 3.45 | 3.45 | 3.45 | 3.45 |
| Reference drawing for corresponding shape | | | | - | Fig. 1 | Fig. 5 | Fig. 7 | Fig. 12 | Fig. 10 | Fig. 11 |
| Evaluation | Infrared reflectance at wavelength of 800 to 1200 nm of infrared reflective layer | | | % | 20.1 | 20.1 | 32.2 | 32.2 | 20.1 | 20.1 |
| | Visible light transmittance at wavelength of 380 to 780 nm of infrared reflective layer | | | % | 86.3 | 86.3 | 76.8 | 76.8 | 86.3 | 86.3 |
| | Tts of laminated glass measured in conformity with ISO 13837 | | | % | 67.6 | 67.6 | 52.5 | 52.5 | 67.6 | 67.6 |
| | Multiple image | Distance between T1 and T2 | | mm | 0.5 | 0.5 | 0.5 | 0.5 | 0.5 | 0.5 |
| | | Distance between T2 and T3 | | mm | 0.5 | 1.3 | 1.3 | 1.7 | 0.5 | 1.3 |
| | | Distance between T1 and T3 | | mm | 1.0 | 0.9 | 0.9 | 1.3 | 1.0 | 0.9 |
| | Image display | | | | ○○ | ○○ | ○○ | ○○ | ○○ | ○○ |

### EXPLANATION OF SYMBOLS

1: First lamination glass member
2, 21, 2J, 2K: First resin layer
3, 3A, 3B, 3E: Infrared reflective layer
4, 4A, 4B, 4C, 4D, 4J: Second resin layer
5, 5B, 5C, 5D, 5G, 5H, 5J: Second lamination glass member
11, 11A, 11B, 11C, 11D, 11E, 11F, 11G, 11H, 11I, 11J, 11K: Laminated glass
11a: One end
11b: Other end
21, 22, 23: Layer
R1: Display region
R2: Surrounding region
R3: Shading region

## Claims

1. An interlayer film for laminated glass, comprising:
a first resin layer;
an infrared reflective layer; and
a second resin layer,
the first resin layer, the infrared reflective layer, and the second resin layer being arranged side by side in this order,
the first resin layer being wedge-like,
the second resin layer being wedge-like.

2. A laminated glass that is a head-up display,
the laminated glass having a display region of the head-up display,
the laminated glass comprising a first lamination glass member, a first resin layer, an infrared reflective layer, and a second lamination glass member, the first lamination glass member, the first resin layer, the infrared reflective layer, and the second lamination glass member being arranged side by side in this order, a laminate of the first lamination glass member and the first resin layer being wedge-like, or the laminated glass comprising a first lamination glass member, a first resin layer, an infrared reflective layer, a second resin layer, and a second lamination glass member, the first lamination glass member, the first resin layer, the infrared reflective layer, the second resin layer, and the second lamination glass member being arranged side by side in this order, a laminate of the first lamination glass member and the first resin layer being wedge-like,
when the laminated glass comprising the first lamination glass member, the first resin layer, the infrared reflective layer, and the second lamination glass member, a laminate of the infrared reflective layer and the second lamination glass member having a thickness of 2.93 mm or less, or a laminate of the infrared reflective layer and the second lamination glass member being wedge-like,
when the laminated glass comprising the first lamination glass member, the first resin layer, the infrared reflective layer, the second resin layer, and the second lamination glass member, a laminate of the infrared reflective layer, the second resin layer and the second lamination glass member having a thickness of 2.93 mm or less, or a laminate of the infrared reflective layer, the second resin layer and the second lamination glass member being wedge-like.

3. A laminated glass that is a head-up display,
the laminated glass having a display region of the head-up display,
the laminated glass comprising a first lamination glass member, a first resin layer, an infrared reflective layer, and a second lamination glass member, the first lamination glass member, the first resin layer, the infrared reflective layer, and the second lamination glass member being arranged side by side in this order, a laminate of the first lamination glass member and the first resin layer being wedge-like, or the laminated glass comprising a first lamination glass member, a first resin layer, an infrared reflective layer, a second resin layer, and a second lamination glass member, the first lamination glass member, the first resin layer, the infrared reflective layer, the second resin layer, and the second lamination glass member being arranged side by side in this order, a laminate of the first lamination glass member and the first resin layer being wedge-like,
when the display region of the laminated glass is irradiated with light at an incident angle of 68.3° from outside the first lamination glass member, and a reflected image is observed at a position of 2500 mm from the display region, a distance between two reflected images that are farthest from each other among three reflected images of a first reflected image by the first lamination glass member, a second reflected image by the infrared reflective layer, and a third reflected image by the second lamination glass member being 2.5 mm or less.

4. The laminated glass according to claim 3, wherein
when the laminated glass comprises the first lamination glass member, the first resin layer, the infrared reflective layer, and the second lamination glass member, a laminate of the infrared reflective layer and the second lamination glass member has a thickness of 2.93 mm or less, or a laminate of the infrared reflective layer and the second lamination glass member is wedge-like, and
when the laminated glass comprises the first lamination glass member, the first resin layer, the infrared reflective layer, the second resin layer, and the second lamination glass member, a laminate of the infrared reflective layer, the second resin layer and the second lamination glass member has a thickness of 2.93 mm or less, or a laminate of the infrared reflective layer, the second resin layer and the second lamination glass member is wedge-like.

5. The laminated glass according to claim 2 or 4, wherein
when the laminated glass comprises the first lamination glass member, the first resin layer, the infrared reflective layer, and the second lamination glass member, a laminate of the infrared reflective layer and the second lamination glass member has a thickness of 2.93 mm or less, and
when the laminated glass comprises the first lamination glass member, the first resin layer, the infrared reflective layer, the second resin layer, and the second lamination glass member, a laminate of the infrared reflective layer, the second resin layer and the second lamination glass member has a thickness of 2.93 mm or less.

6. The laminated glass according to claim 2, 4 or 5, wherein
when the laminated glass comprises the first lamination glass member, the first resin layer, the infrared reflective layer, and the second lamination glass member, a laminate of the infrared reflective layer and the second lamination glass member is wedge-like, and
when the laminated glass comprises the first lamination glass member, the first resin layer, the infrared reflective layer, the second resin layer, and the second lamination glass member, a laminate of the infrared reflective layer, the second resin layer and the second lamination glass member is wedge-like.

7. The laminated glass according to claim 2, 4, 5 or 6, wherein
when the laminated glass comprises the first lamination glass member, the first resin layer, the infrared reflective layer, and the second lamination glass member, the infrared reflective layer is wedge-like, and
when the laminated glass comprises the first lamination glass member, the first resin layer, the infrared reflective layer, the second resin layer, and the second lamination glass member, the infrared reflective layer is wedge-like.

8. The laminated glass according to claim 2, 4, 5, 6 or 7, wherein when the laminated glass comprises the first lamination glass member, the first resin layer, the infrared reflective layer, the second resin layer, and the second lamination glass member, the first resin layer is wedge-like, and the second resin layer is wedge-like.

9. The laminated glass according to any one of claims 2 to 8, wherein
when the laminated glass comprises the first lamination glass member, the first resin layer, the infrared reflective layer, and the second lamination glass member, the first resin layer contains a polyvinyl acetal resin as a resin, and
when the laminated glass comprises the first lamination glass member, the first resin layer, the infrared reflective layer, the second resin layer, and the second lamination glass member, the first resin layer contains a polyvinyl acetal resin as a resin, and the second resin layer contains a polyvinyl acetal resin as a resin.

10. The laminated glass according to any one of claims 2 to 9, wherein
when the laminated glass comprises the first lamination glass member, the first resin layer, the infrared reflective layer, and the second lamination glass member, the first resin layer contains a plasticizer, and
when the laminated glass comprises the first lamination glass member, the first resin layer, the infrared reflective layer, the second resin layer, and the second lamination glass member, the first resin layer contains a plasticizer, and the second resin layer contains a plasticizer.

11. The laminated glass according to any one of claims 2 to 10, wherein the first resin layer has a two or more-layer structure.

12. The laminated glass according to any one of claims 2 to 11, wherein the infrared reflective layer has such a property that the infrared transmittance is 40% or less at at least one wavelength within the range of 800 nm to 2000 nm.

13. The laminated glass according to any one of claims 2 to 12, wherein the infrared reflective layer has an infrared reflectance at a wavelength of 800 nm to 1200 nm of 20% or more.

14. The laminated glass according to any one of claims 2 to 13, wherein the infrared reflective layer has a visible light transmittance at a wavelength of 380 nm to 780 nm of 70% or more.

15. The laminated glass according to any one of claims 2 to 14, wherein Tts of the laminated glass measured in conformity with ISO 13837 is 60% or less.

16. A method for installing the laminated glass according to any one of claims 2 to 15 to an opening of a vehicle, between an exterior space and an interior space to which a heat ray is incident from the exterior space,
the laminated glass being installed to the opening in such a manner that the first lamination glass member is located on a side of the interior space, and the second lamination glass member is located on a side of the exterior space.
